# EUROPÄISCHE PATENTANMELDUNG

(11) **EP 4 797 570 A1**
(43) Veröffentlichungstag der Anmeldung: **26.08.2026**
(21) Anmeldenummer: 26160229.6
(22) Anmeldetag: 23.02.2026
(51) Int. Cl.: H04B 10/114, H04B 5/20, H04B 10/80

(54) **VORRICHTUNG ZUM AUSSENDEN OPTISCH-KABELLOSER SIGNALE**

(30) Priorität: 24.02.2025 DE 102025106919
(71) Anmelder: Fraunhofer-Gesellschaft zur Förderung der angewandten Forschung e.V., 80686 München (DE)
(72) Erfinder: KIRRBACH, René, 01109 Dresden (DE); SCHNEIDER, Tobias, 01109 Dresden (DE); MEIßNER, Philipp, 01109 Dresden (DE)
(74) Vertreter: König, Andreas Rudolf

(57) **Zusammenfassung**

Eine Vorrichtung zum Aussenden optisch-kabelloser Signale umfasst eine Signalquelle zum Bereitstellen zumindest eines Signals und eine Mehrzahl räumlich verteilter optischer Transmitter zum Aussenden einer korrespondierenden Mehrzahl optisch-kabelloser Signale. Ferner ist eine Synchronisierungseinrichtung angeordnet, die ausgebildet ist, um das zumindest eine Signal für die Mehrzahl von optischen Transmittern in eine korrespondierende Mehrzahl von untereinander synchronisierten Eingangssignalen umzusetzen. Basierend auf dem zumindest einen Signal wird mit der Mehrzahl optischer Transmitter basierend auf der Mehrzahl untereinander synchronisierter Eingangssignale die Mehrzahl optisch-kabelloser Signale räumlich verteilt als untereinander synchronisierte optisch-kabellose Signale ausgesendet.

## Beschreibung

Die vorliegende Patentanmeldung bezieht sich auf eine Vorrichtung zum Aussenden optisch-kabelloser Signale und auf ein System mit einer solchen Vorrichtung. Die vorliegende Erfindung bezieht sich insbesondere auf einen optischen Drehübertrager außerhalb der Drehachse, engl.: "Off-Axis", der einen Laserdioden (LD)-Ring nutzt.

Die fortschreitende Digitalisierung führt zu immer mehr Anwendungen, bei denen Daten über rotierende Teile hinweg übertragen werden müssen. Die Anforderungen an diese Drehübertrager in Bezug auf Datenrate, Latenz und Zuverlässigkeit steigen stetig, so dass neue Technologien unerlässlich sind. Klassische Schleifringe sind durch den mechanischen Abrieb in ihrer Lebensdauer begrenzt. Um Stand- und Wartungszeiten zu minimieren, werden zunehmend abriebfreie, das heißt, kontaktlose Technologien eingesetzt. Wesentliche Anforderungen an Schleifringe, die sich aus den Anwendungen ergeben, sind: Datenrate (>=1Gbps), geringe Latenz, hohe Zuverlässigkeit, hohe Lebensdauer, niedrige Stückkosten, hohe elektromagnetische Verträglichkeit. Je nach Anwendung muss der Drehübertrager auf der Rotationsachse, oder, wenn dort kein Platz verfügbar ist, außerhalb der Drehachse platziert werden. Heutige technische Lösungen, insbesondere außerhalb der Drehachse, erfüllen nicht alle technischen Anforderungen zufriedenstellend.

Gegenwärtige Lösungen für Drehübertrager außerhalb der Drehachse sind typischerweise kapazitiv gekoppelt [1]. Diese Lösungen sind üblicherweise in der Datenrate auf <=1Gbps begrenzt und anfällig für elektromagnetische Störungen [2]. Die Toleranz- und Montaganforderungen an die kapazitive Kopplung sind für hohe Datenraten hoch, so dass die kapazitive Kopplung kostenintensiv sein kann.

Eine induktive Kopplung ist ebenfalls möglich [3], aber die Systeme sind tendenziell groß und anfällig gegenüber EMI und können außerdem andere sensible elektrische Geräte in ihrer Nähe beeinträchtigen. Außerdem haben sie eine stark begrenzte Reichweite von wenigen Millimetern [4], die zu einer erhöhten Komplexität der Ringe oder teilweise eingeschränkter Anwendungsfälle führen kann.

Die Datenübertragung könnte mittels Funk erfolgen [1, 5], allerdings sind Funksysteme anfällig gegenüber Interferenzen und besitzen eine eher schwache elektromagnetische Verträglichkeit. Für manche Applikationen besteht ein Sicherheitsrisiko durch andere Funksignale. Da die Drehübertrager häufig im industriellen Umfeld eingesetzt werden, wo Zuverlässigkeit eine wichtige Kenngröße ist, eignen sich Funklösungen aufgrund schwankender Datenraten und variabler hoher Latenzen nicht für zuverlässige Drehübertrager.

Grundsätzlich vielversprechend ist der Einsatz einer optischen Datenübertragung aufgrund der potentiell hohen Datenrate und hoher elektromagnetischer Verträglichkeit. Auf der Rotationsachse gibt es hierbei kommerzielle Lösungen mit optisch-drahtlosen Transceivern [6-8] oder fasergekoppelter Transceivern (engl. fiber rortary optical joint, FROJ) [1]. Außerhalb der Drehachse spielen optische Drehübertrager momentan keine wesentliche Rolle.

Helzel und Martens [9] untersuchen einen optischen Schleifring außerhalb der Rotationsachse, der mit einem Sende- und einem Empfangselement arbeitet. Das gesendete Signal wird durch einen reflektierenden Ring auf der Ringbahn gehalten und vom Empfänger durch ein optisches Element aus dem Ring heraus auf den Detektor gelenkt. Problematisch an dem Ansatz ist die limitierte Datenrate (140 Mbit/s) und die Notwendigkeit, kostenintensiver, ringdurchmesserspezifischer Optiken- hier: der Spiegel.

Es besteht deshalb der Bedarf an einer Verbesserung optisch-kabelloser Kommunikation, insbesondere bei einer Relativbewegung von Komponenten zueinander.

Die Aufgabe der vorliegenden Erfindung besteht deshalb darin, eine Vorrichtung zum Aussenden optisch-kabelloser Signale bereitzustellen, die eine zuverlässige Kommunikation auch bei einer Relativbewegung zu einem Empfänger der optisch-kabellosen Signale und insbesondere bei hohen Relativgeschwindigkeiten ermöglicht.

Diese Aufgabe wird durch den Gegenstand der unabhängigen Patentansprüche gelöst.

Ein Kerngedanke der vorliegenden Erfindung besteht darin, erkannt zu haben, dass eine Synchronisierung durch die Vorrichtung ausgesendeter optisch-kabelloser Signale und mit einer Mehrzahl von optischen Transmittern es ermöglicht, dass sich ein Empfänger relativ zu den Transmittern bewegt und im Falle eines Wechsels des Empfängers von einem optischen Signal des ersten Transmitters zu einem optischen Signal des zweiten Transmitters eine Synchronisierung der optischen Signale insofern von Vorteil ist, dass ein unterbrechungsfreier Empfang bzw. eine nahtlose Übertragung optischer Signale ermöglicht ist. Dies ist insbesondere bei angestrebt hohen Datenübertragungsraten von Vorteil, da bei Datenraten von Gbit/s die optische Laufzeit auch in Einrichtungen zum Aufteilen von Strahlen bereits zu asynchronen Ausgangssignalen führen kann. Hintergrund ist, dass die Bitlänge im ns-Bereich liegt und dort Weglängenunterschiede auch bei Lichtgeschwindigkeit relevant werden. Erfindungsgemäß wird deshalb eine Synchronisierungseinrichtung eingesetzt, um die optischen Ausgangssignale miteinander zu synchronisieren, um die eingangs genannten Probleme zu beheben.

Gemäß einem Ausführungsbeispiel umfasst eine Vorrichtung zum Aussenden optisch-kabelloser Signale eine Signalquelle zum Bereitstellen zumindest eines Signals und eine Mehrzahl räumlich verteilter optischer Transmitter zum Aussenden einer korrespondierenden Mehrzahl optisch-kabelloser Signale. Die Vorrichtung umfasst ferner eine Synchronisierungseinrichtung, die ausgebildet ist, um das zumindest eine Signal für die Mehrzahl von optischen Transmittern in eine korrespondierende Mehrzahl von untereinander synchronisierten Eingangssignalen umzusetzen. Die Vorrichtung ist ausgebildet, um basierend auf dem zumindest einen Signal mit der Mehrzahl optischer Transmitter basierend auf der Mehrzahl untereinander synchronisierter Eingangssignale die Mehrzahl optisch-kabelloser Signale räumlich verteilt als untereinander synchronisierte optisch-kabellose Signale auszusenden. Dies ermöglicht einen nahtlosen Empfang des jeweiligen Signals bzw. das Aneinanderfügen unterschiedlicher Teilsignale für den Fall, dass sich ein Empfänger relativ zu den optischen Transmittern bewegt und der Wechsel zwischen einem Sender zu einem anderen Sender beispielsweise während eines Datenpakets erfolgt.

Gemäß einem Ausführungsbeispiel ist die Signalquelle ausgebildet, um das zumindest eine Signal als ein Datensignal bereitzustellen, wobei die Mehrzahl optisch-kabelloser Signale synchronisierte Signale übereinstimmendem Dateninhalts sind. Dies ermöglicht auch bei hohen Relativbewegungsgeschwindigkeiten eine zuverlässige Datenübertragung.

Gemäß einem Ausführungsbeispiel ist die Synchronisierungseinrichtung ausgebildet, um unterschiedliche Laufzeiten des zumindest einen Signals von der Signalquelle zu der Mehrzahl optischer Transmitter elektrisch passiv auszugleichen. Dies kann beispielsweise über eine Angleichung von Leitungslängen und/oder über die Verwendung von Buffer-Einrichtungen erfolgen, um sicherzustellen, dass die jeweiligen Signale an den optischen Transmittern gleichzeitig eintreffen und eine gleichzeitige Konversion der Signale erfolgt, auch wenn die Ausführungsbeispiele nicht hierauf eingeschränkt sind.

Gemäß einem Ausführungsbeispiel ist die Synchronisierungseinrichtung mit zumindest einem Buffer bzw. Signalpuffer ausgestattet, der einen Signaleingang aufweist, welcher mit der Signalquelle gekoppelt ist, um das Signal zu empfangen. Der Buffer weist eine Mehrzahl von Signalausgängen auf und ist ausgebildet, um eine Mehrzahl von Bufferausgangssignalen basierend auf dem Signal als synchronisierte Bufferausgangssignale auszugeben. Die Eingangssignale der mit den Signalausgängen gekoppelten optischen Transmittern der Mehrzahl von optischen Transmittern basieren auf den Bufferausgangssignalen und/oder sind die Bufferausgangssignale. Dies ermöglicht die vorteilhafte Verwendung von Buffer-Eigenschaften dahingehend, dass diese an unterschiedlichen Signalausgängen ein Signal gleichzeitig bereitstellen können.

Gemäß einem Ausführungsbeispiel sind die Signalleitungen zwischen der Mehrzahl von Signalausgängen des Buffers einerseits und den mit den Signalausgängen gekoppelten optischen Transmittern andererseits so ausgebildet, dass diese eine im Wesentlichen übereinstimmende Leitungslängen aufweisen. Dies ermöglicht den Erhalt von im Wesentlichen übereinstimmenden Laufzeitverzögerungen in den Leitungslängen und den Beibehalt der Synchronität.

Gemäß einem Ausführungsbeispiel sind Positionen der mit den Signalausgängen gekoppelten optischen Transmitter in einem Transmitterbereich verteilt und/oder die Positionen der Transmittereinrichtungen definiert. Der Buffer ist im Wesentlichen mittig in dem Transmitterbereich angeordnet, was es in vorteilhafterweise ermöglicht, eine im Wesentlichen gleiche Leitungslänge zu den Rändern des Transmitterbereichs zu haben. Außerdem werden die Leiterbahnen so gleichmäßiger entlang des Rings verteilt und ein räumlicher Engpass an der Signalquelle vermieden. Alternativ oder zusätzlich oder benachbarte optische Transmitter, die entlang unterschiedlicher Signalpfade ausgehend von der Signalquelle angeordnet sind, einen im Wesentlichen gleichen Abstand und/oder Laufzeitverzögerung der Eingangssignale aufweisen.

Gemäß einem Ausführungsbeispiel weist die Vorrichtung eine Mehrzahl von Buffern auf, wobei jeder zumindest einer Teilmenge der Mehrzahl von Buffern mit einer Teilmenge der Mehrzahl optischer Transmitter gekoppelt ist. Das bedeutet, mehrere Buffer können mit einer jeweiligen Mehrzahl von optischen Transmittern gekoppelt sein. Dies ermöglicht die Vereinfachung der Synchronisierungsaufgabe dahingehend, dass die Synchronisierung der Signaleingänge der Buffer eine nachfolgende Synchronisierungskomplexität reduzieren kann.

Gemäß einem Ausführungsbeispiel ist die Mehrzahl von Buffern in einer kaskadierten Anordnung von Buffern angeordnet. Das bedeutet, zusätzlich zu der Teilmenge von Buffern können zusätzliche Buffer einer zusätzlichen Kaskadierungsstufe eingerichtet sein, was es in vorteilhafterweise ermöglicht, mehrere Buffer untereinander unter Verwendung eines weiteren Buffers zu synchronisieren.

Gemäß einem Ausführungsbeispiel deckt die Teilmenge der optischen Transmitter eine Transmitterfläche vollständig ab und die Teilmengen der optischen Transmitter bedecken im Wesentlichen Teilflächen der Transmitterfläche gleicher Größe. Eine derartige Symmetrie ist für die Synchronisierung optischer Signale vorteilhaft.

Gemäß einem Ausführungsbeispiel ist die Mehrzahl optischer Transmitter entlang einer Kreisbahn angeordnet und die Mehrzahl optischer Transmitter ist an einem Trägersubstrat angeordnet, das eine kreisförmige oder ringförmige Geometrie aufweist und die Mehrzahl von optischen Transmittern ist ringförmig an dem Substrat angeordnet. Dies ermöglicht eine vorteilhafte Anpassung an eine Rotationsbewegung der Vorrichtung und/oder einer Vorrichtung zum Empfangen der optischen Signale, anders ausgedrückt einer Relativbewegung zwischen diesen Vorrichtungen entlang einer Kreisbahn.

Gemäß einem Ausführungsbeispiel umfasst die Vorrichtung ferner zumindest einen optischen Empfänger, der ausgebildet ist, um ein optisch-kabelloses Signal von einer anderen Vorrichtung zu empfangen und umzusetzen. Dies ermöglicht eine bidirektionale Übertragung optisch-kabelloser Signale mit der anderen Vorrichtung.

Gemäß einem Ausführungsbeispiel ist die Signalquelle für eine Datenverarbeitung ausgebildet und weist einen Signalverstärker auf, und die Verstärkung des Signalverstärkers kann adaptiv gesteuert werden. Dies ermöglicht eine vorteilhafte Anpassung der optisch-kabellosen Signale.

Gemäß einem Ausführungsbeispiel ist einer, mehrere oder alle der optischen Transmitter ausgebildet, um einen Pufferschaltkreis oder Treiberschaltkreis und einen optischen Emitter zu umfassen. Dies ermöglicht die Bereitstellung eines optischen Transmitters als integrierte Einrichtung.

Gemäß einem Ausführungsbeispiel umfasst zumindest einer der optischen Transmitter eine Linse, einen Reflektor und/oder einen Diffusor, um von dem optischen Transmitter basierend auf dem Eingangssignal erzeugtes Licht optisch zu formen, etwa zu kollimieren oder zu streuen, was einen zusätzlichen Freiheitsgrad für eine Anpassung der optisch-kabellosen Kommunikation ermöglicht.

Gemäß einem Ausführungsbeispiel umfasst zumindest einer der optischen Transmitter eine Mehrwegelinse, die ausgebildet ist, um eine Lichtleistung von dem optischen Transmitter basierend auf dem Eingangssignal erzeugten Licht in mehrere Teillichtbündel aufzuteilen, was es in vorteilhafterweise ermöglicht, Erfordernisse beispielsweise an die Augensicherheit oder dergleichen zu erfüllen und gleichzeitig einen größeren räumlichen Bereich mit den optisch-kabellosen Signalen abzudecken.

Gemäß einem Ausführungsbeispiel wird ein System bereitgestellt, das zum Übertragen optisch-kabelloser Signale eingerichtet ist. Hierzu ist eine Vorrichtung in Übereinstimmung mit den hierin beschriebenen Ausführungsbeispielen als erste Vorrichtung vorgesehen und eine zweite Vorrichtung zum Empfangen zumindest einer Teilmenge der synchronisierten optisch-kabellosen Signale. Diese Teilmenge bezieht sich darauf, dass aufgrund der synchronisierten Ausgestaltung der optisch-kabellosen Signale es ausreichend sein kann, dass die zweite Vorrichtung lediglich eines dieser Signale, eine Mehrzahl von Signalen oder auch alle der Signale empfangen kann, aber dass bereits der Empfang eines der optisch-kabellosen Signale ausreichend sein kann, um die damit übertragene Energie und/oder Daten erfolgreich zu übertragen.

Gemäß einem Ausführungsbeispiel weist zumindest die zweite Vorrichtung eine Mehrzahl von räumlich verteilten optischen Empfängern auf. Dies ermöglicht es, die Zuverlässigkeit der optischen Übertragung weiter zu erhöhen.

Gemäß einem Ausführungsbeispiel weisen ein erster optischer Empfänger und ein benachbarter zweiter optischer Empfänger der zweiten Vorrichtung einen Abstand auf, der im Wesentlichen hälftig bzw. ein ungeradzahliges Vielfaches zu einem halben Abstand zwischen zwei benachbarten optischen Transmittern der ersten Vorrichtung ist, d. h. $\left(2n-1\right) ⋅ \frac{Abstand}{2}$ mit einer natürlichen Zahl n. Dies ermöglicht es in vorteilhafterweise sicherzustellen, dass stets genügend optisch-kabellose Leistung an mindestens einem der optischen Transmitter eintrifft, um die Zuverlässigkeit der optischen Kommunikation zu erhöhen.

Gemäß einem Ausführungsbeispiel umfasst die zweite Vorrichtung eine Verstärkerschaltung, die mit dem ersten optischen Empfänger und dem zweiten optischen Empfänger gekoppelt ist, um ein erstes Empfängersignal des ersten optischen Empfängers und ein zweites Empfängersignal des zweiten optischen Empfängers zu verstärken. Dies ermöglicht die synergetische Nutzung einer Verstärkerschaltung für zwei oder mehrere optische Empfänger, wobei die Verstärkung optisch und/oder elektrisch erfolgen kann. Gleichzeitig kann in einer derartigen Schaltung eine Zusammenführung der Empfangssignale erfolgen.

Gemäß einem Ausführungsbeispiel ist eine Verstärkerschaltung der zweiten Vorrichtung ausgebildet, um ein erstes Empfängersignal des ersten optischen Empfängers zu verstärken, um ein erstes verstärktes Signal bereitzustellen. Eine zweite Verstärkerschaltung der zweiten Vorrichtung ist ausgebildet, um ein zweites Empfängersignal des zweiten optischen Empfängers zu verstärken, um ein zweites verstärktes Signal bereitzustellen. Die zweite Vorrichtung umfasst hierzu eine Verarbeitungseinrichtung zum Kombinieren des ersten verstärkten Signals und des zweiten verstärkten Signals, was eine individuelle Funktionsplanung gegenüber einer Kombination in der Verstärkerschaltung ermöglicht.

Gemäß einem Ausführungsbeispiel wird eine Variation diesbezüglich bereitgestellt, indem die beiden Verstärkerschaltungen das erste bzw. zweite Empfängersignal des ersten bzw. zweiten optischen Empfängers empfangen und verstärken und ausgebildet sind, um ein erstes bzw. zweites verstärktes Signal bereitzustellen. Die zweite Vorrichtung umfasst eine Verarbeitungseinrichtung, die ausgebildet ist, um eine Datenverarbeitung verstärkter Signale auszuführen und für die Datenverarbeitung eines aus dem ersten verstärkten Signal und dem zweiten verstärkten Signal auszuwählen. Dies kann es in vorteilhafterweise ermöglichen, etwaige verbleibende Laufzeitunterschiede in den empfangenen optisch-kabellosen Signalen zu kompensieren, indem beispielsweise basierend auf Signalamplituden, Signal-zu-Rauschverhältnissen, engl.: signal-to-noise ratio, SNR, oder dergleichen ein Umschalten zwischen dem jeweiligen verarbeiteten verstärkten Signal erfolgt. Das Umschalten kann beispielsweise zu Zeitpunkten erfolgen, zu denen eine Neuinitialisierung eines entsprechenden Arbeitsschritts ausgeführt wird, beispielsweise zwischen zwei aufeinanderfolgenden Datenpaketen oder dergleichen.

Gemäß einem Ausführungsbeispiel wird ein System bereitgestellt, bei dem eine Bewegungsbahn einer Relativbewegung zwischen der ersten Vorrichtung und der zweiten Vorrichtung so angeordnet ist, dass in jeder Relativposition der Relativbewegung zumindest ein optischer Transmitter der ersten Vorrichtung in einem Empfangsbereich eines optischen Empfängers der zweiten Vorrichtung angeordnet ist. Dies ermöglicht eine nahtlose Übertragung optisch-kabelloser Signale.

Gemäß einem Ausführungsbeispiel definieren Einzelempfangsbereiche der einzelnen räumlich verteilten Empfänger der zweiten Vorrichtung zusammengenommen einen Gesamtempfangsbereich. Anders ausgedrückt kann der Gesamtempfangsbereich als eine Zusammenfassung der Einzelempfangsbereiche verstanden werden. Die Mehrzahl optischer Transmitter ist ausgebildet, den Gesamtbereich lückenbehaftet auszuleuchten. Aufgrund der synchronisierten optisch-kabellosen Signale ist es zwar möglich aber nicht erforderlich, eine vollständige Ausleuchtung vorzunehmen, es kann vielmehr zur Einsparung von Gewicht, Material und Kosten eine reduzierte Anzahl von Transmittern verwendet werden, da es ausreichend sein kann, dass zumindest einer der Empfänger stets eines der synchronisierten Signale empfängt.

Gemäß einem Ausführungsbeispiel sind die erste Vorrichtung und die zweite Vorrichtung um eine gemeinsame Rotationsachse rotierbar angeordnet. Alternativ oder zusätzlich ist die zweite Vorrichtung in einem von der Mehrzahl von synchronisierten optisch-kabellosen Signalen ausgeleuchteten Bereich beweglich.

Gemäß einem Ausführungsbeispiel sind die Vorrichtungen um eine gemeinsame Rotationsachse angeordnet und ein durch die Mehrzahl von synchronisierten optisch-kabellosen Signale erzeugter Abdeckungsbereich stimmt im Wesentlichen mit einer Bewegungsbahn der zweiten Vorrichtung in dem System überein. Dies ermöglicht, dass stets einer der optischen Empfänger in dem Abdeckungsbereich angeordnet ist.

Gemäß einem Ausführungsbeispiel weist die zweite Vorrichtung eine Verstärkereinrichtung auf, die mit einem optischen Empfänger gekoppelt ist und nahe zu dem optischen Empfänger angeordnet ist. Dies ermöglicht eine geringe Laufzeitverzögerung zwischen dem optischen Empfänger und der Verstärkereinrichtung und ein rauscharmen, platzsparenden Entwurf..

Gemäß einem Ausführungsbeispiel ist die zweite Vorrichtung des Systems angeordnet, um abhängig von einer Relativposition zwischen der ersten Vorrichtung und der zweiten Vorrichtung zumindest eines der Mehrzahl von synchronisierten optisch-kabellosen Signalen zu detektieren, was es ermöglicht, eine nahtlose Übertragung optisch-kabelloser Signale bereitzustellen.

Gemäß einem Ausführungsbeispiel ist jeder der Mehrzahl von synchronisierten optisch-kabellosen Signale ausgelegt, um einen Teilbereich eines Gesamtbereichs auszuleuchten, wobei sich die Teilbereiche an der zweiten Vorrichtung überlappen. Dies kann so weit geführt werden, dass ein zusammenhängender Bereich als Abdeckungsbereich erhalten wird, was aber, wie vorangehend beschrieben, nicht erforderlich ist und auch zwei oder mehr Teilbereiche erhalten werden können.

Gemäß einem Ausführungsbeispiel ist die Mehrzahl von synchronisierten optisch-kabellosen Signalen eine erste Mehrzahl von synchronisierten optisch-kabellosen Signalen eines ersten optisch-kabellosen Kommunikationskanals. Die erste und/oder die zweite Vorrichtung weisen eine weitere Mehrzahl von synchronisierten optischen Transmittern auf, um einen weiteren optisch-kabellosen Kommunikationskanal entweder als Rückkanal oder als zusätzlichen Kanal entlang der gleichen Richtung bereitzustellen. Zusätzliche Kommunikationskanäle können problemlos bereitgestellt werden, was zusätzliche Freiheitsgrade in der Auslegung der Kommunikation ermöglicht.

Gemäß einem Ausführungsbeispiel sind die erste Mehrzahl und die weitere Mehrzahl auf unterschiedlichen konzentrischen Bahnen angeordnet und/oder für unterschiedliche Wellenlängenbereiche eingerichtet. Dies ermöglicht eine fehlerunanfällige Separation der Kanäle.

Gemäß einem Ausführungsbeispiel ist das System zur bidirektionalen Übertragung optisch-kabelloser Signale eingerichtet.

Gemäß einem Ausführungsbeispiel ist ein hierin beschriebenes System zur Übertragung elektrischer Energie basierend auf zumindest einem optisch-kabellosen Energiesignal und von der ersten Vorrichtung zur zweiten Vorrichtung oder von der zweiten Vorrichtung zur ersten Vorrichtung eingerichtet. Das bedeutet, die synchronisierte Eigenschaft vorangehend beschriebener Signale lässt sich vorteilhaft für Datensignale implementieren, ist aber problemlos auch für die Übertragung optischer Energie zur späteren Umwandlung in elektrische Energie zum Betreiben elektrischer Komponenten und/oder Laden von Energiespeichern möglich.

Gemäß einem Ausführungsbeispiel weist das System optische Emitter für die Übertragung des zumindest einen optisch-kabellosen Energiesignals auf, wobei die optischen Emitter entlang einer Bewegungsbahn einer Relativbewegung zwischen der ersten Vorrichtung und der zweiten Vorrichtung angeordnet sind und Abdeckungsbereiche der optischen Emitter zusammengenommen die gesamte Bewegungsbahn abdecken.

Weitere vorteilhafte Ausgestaltungen sind der Gegenstand weiterer abhängiger Patentansprüche.

Besonders bevorzugte Ausführungsformen der vorliegenden Erfindung werden nachfolgend Bezug nehmend auf die beiliegenden Zeichnungen erläutert. Es zeigen:
- Fig. 1: ein schematisches Blockschaltbild einer Vorrichtung gemäß einem Ausführungsbeispiel;
- Fig. 2: eine schematische perspektivische Ansicht eines Systems gemäß einem Ausführungsbeispiel;
- Fig. 3: eine schematische Draufsicht auf eine Vorrichtung gemäß einem Ausführungsbeispiel mit einer Vielzahl optischer Transmitter;
- Fig. 4a: eine schematische Draufsicht auf die Vorrichtung gemäß Fig. 3, wobei Abstrahlbereiche der optischen Transmitter rund gebildet sind;
- Fig. 4b: eine schematische Draufsicht auf die Vorrichtung gemäß Fig. 3, wobei Abstrahlbereiche der optischen Transmitter elliptisch gebildet sind;
- Fig. 5: eine schematische Draufsicht auf eine optische Vorrichtung gemäß einem Ausführungsbeispiel, die gegenüber der Vorrichtung aus Fig. 3 mehrere Modifikationen aufweist;
- Fig. 6: ein schematisches Blockschaltbild zumindest eines Teils einer Systemanordnung hierin beschriebener Ausführungsbeispiele;
- Fig. 7: eine schematischen Draufsicht auf eine Vorrichtung gemäß einem Ausführungsbeispiel, mit einer Anordnung von zumindest zwei optischen Receivern;
- Fig. 8a: eine schematische Draufsicht auf einen derartigen Sendering des Drehübertragers mit optisch-kabellose Energieübertragung; und
- Fig. 8b: eine schematische Draufsicht auf einen Empfangsring des Drehübertragers mit optisch-kabelloser Energieübertragung.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgend beschriebene Ausführungsbeispiele werden im Zusammenhang mit einer Vielzahl von Details beschrieben. Ausführungsbeispiele können jedoch auch ohne diese detaillierten Merkmale implementiert werden. Des Weiteren werden Ausführungsbeispiele der Verständlichkeit wegen unter Verwendung von Blockschaltbildern als Ersatz einer Detaildarstellung beschrieben. Ferner können Details und/oder Merkmale einzelner Ausführungsbeispiele ohne Weiteres mit einander kombiniert werden, solange es nicht explizit gegenteilig beschrieben ist.

Nachfolgende Ausführungsbeispiele beziehen sich auf eine optisch-kabellose synonym als optisch-drahtlos bezeichnete Signalübertragung oder Datenübertragung. Diese kann im Rahmen der hierin beschriebenen Ausführungsbeispiele auch als LiFi (Light Fidelity; Lichtübertragung) bezeichnet werden. Als optisch-kabellose Übertragungen können unter anderem Begriffe wie IrDA (Infrared Data Association) oder OWC (Optical Wireless Communication; optische drahtlose Kommunikation) verstanden werden. Das bedeutet, die Ausdrücke "optisch-drahtlose Datenübertragung", "optisch-kabelloser Datenübertragung" und "LiFi" werden synonym verwendet. Als optisch-kabellose Datenübertragung wird hierbei verstanden, ein elektromagnetisches Signal durch ein freies Übertragungsmedium, beispielsweise Luft oder ein anderes Gas oder ein Fluid, zu übertragen. Hierfür können beispielsweise Wellenlängen in einem ultravioletten (UV) Bereich mit zumindest 53 nm und dem Infrarotbereich, beispielsweise höchstens 1550 nm, verwendet werden, wobei auch andere Wellenlängen möglich sind, die sich von für Funkstandards benutzten Wellenlängen unterscheiden. Eine optisch-kabellose Datenübertragung ist auch von einer fasergebundenen optischen Datenübertragung zu unterscheiden, die beispielsweise mittels Lichtwellenleiter oder Lichtwellenleiterkabel implementiert wird. Die Begriffe Transmitter und Sender werden als Synonyme verwendet. Gleiches gilt für die Begriffe Empfänger und Receiver.

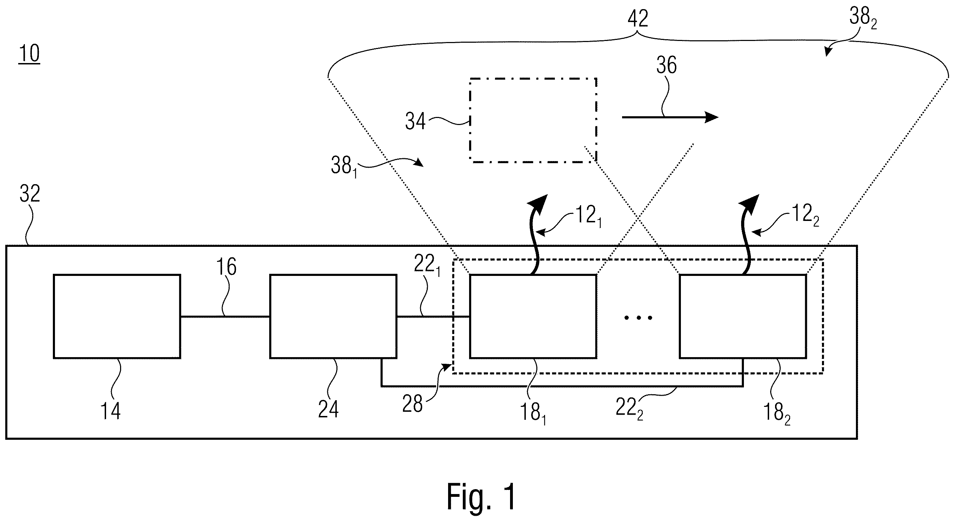

Fig. 1 zeigt ein schematisches Blockschaltbild einer Vorrichtung 10 gemäß einem Ausführungsbeispiel. Die Vorrichtung 10 ist zum Aussenden optisch-kabelloser Signale 12₁, 12₂ und womöglich weiterer optisch-kabelloser Signale eingerichtet. Hierzu umfasst die Vorrichtung 10 eine Signalquelle 14 zum Bereitstellen zumindest eines Signals 16. Das Signal 16 kann ein elektrisches Signal, ein optisches Signal oder mit einer anderen Energieform bereitgestellt werden. Es ist dabei möglich aber nicht notwendig, dass die Signalquelle 14 das Signal 16 an lediglich einem Signalausgang bereitstellt, es kann ebenso an mehreren Signalausgängen in mehrfacher Ausführung bereitgestellt werden. Das Signal 16 kann dabei ein Datensignal oder ein Energiesignal sein, die vorliegende Erfindung ist mit beiden Arten von Signalen implementierbar. Als Datensignal wird in Übereinstimmung mit den hierin beschriebenen Ausführungsbeispielen ein Signal zum Übertragen von Informationen verstanden, auch wenn hierzu eine Signalleistung ≠ 0, d. h. von NULL verscheiden, verwendet wird. Diese Signalleistung ist aber ungleich geringer verglichen mit einem Energiesignal, dessen Aufgabe darin bestehen kann, um am Ort des Empfängers eine Konversion in elektrische Energie aus dem optisch-kabellosen Signal zu ermöglichen, wobei diese Energie dafür nutzbar sein kann, um Bauteile elektrisch zu betreiben und/oder Energiespeicher zu laden. Hierzu wird in der Regel angestrebt, möglichst hohe Signalleistungen zu übertragen, während dies für Datensignale in der Regel nicht vonnöten ist.

Die Vorrichtung 10 umfasst eine Mehrzahl, das heißt, zumindest 2, zumindest 3 oder mehr räumlich verteilte optische Transmitter 18₁, 18₂, die ausgebildet sind, um basierend auf einem jeweiligen Eingangssignal 22₁ bzw. 22₂ das jeweilige optisch-kabellose Signal 12₁ bzw. 12₂ bereitzustellen und auszusenden. Hierzu können die optischen Transmitter 18₁ und/oder 18₂ beispielsweise Elemente zur Lichterzeugung, etwa Leuchtdioden, Laserdioden oder dergleichen, umfassen, um elektrische Eingangssignale 22₁ und 22₂ zu konvertieren. Eine derartige Konversion kann unnötig sein, wenn die Eingangssignale 22₁ und 22₂ bereits optischer Natur sind.

Ferner weist die Vorrichtung 10 eine Synchronisierungseinrichtung 24 auf, die ausgebildet ist, um das Signal 16 für die Mehrzahl von optischen Transmittern 18₁, 18₂ in eine korrespondierende Mehrzahl von Eingangssignalen 22₁ und 22₂ umzusetzen, wobei diese Eingangssignale untereinander synchronisiert sind, zumindest bezogen auf den Ort der Transmitter 18₁ und 18₂. Anders ausgedrückt erreichen aufgrund der Synchronisierungseinrichtung 24 die Eingangssignale 22₁ und 22₂ die optischen Transmitter 18₁ und 18₂ derart, dass die optisch-kabellosen Signale 12₁ und 12₂ synchronisiert ausgesendet werden. Wird eine Ausführungsform der vorliegenden Erfindung betrachtet, bei der die optischen Transmitter 18₁ und 18₂ baugleich und mit im Wesentlichen gleichen elektrisch-optischen Eigenschaften implementiert sind, so wird in dieser Ausgestaltung möglicherweise angestrebt, die Eingangssignale 22₁ und 22₂ als gleichzeitig und synchronisiert an den optischen Transmittern 18₁ und 18₂ eintreffend bereitzustellen.

Eine derartige Synchronisierung kann eine Zeitverzögerung zur Kompensation unterschiedlicher Laufzeiten hin zu den optischen Transmittern 18₁ und 18₂ umfassen und/oder kann eine Implementierung unterschiedlicher Laufzeiten zur Kompensation unterschiedlicher Abstände zwischen der Signalquelle 14 und den optischen Transmittern 18₁ und/oder 18₂ oder Teilstrecken hiervon umfassen.

Bei einer derartigen Ausgestaltung wird ermöglicht, dass die Vorrichtung basierend auf dem zumindest einen Signal 16 mit der Mehrzahl optischer Transmitter 18₁ und 18₂ basierend auf der Mehrzahl untereinander synchronisierten Eingangssignalen 22₁ und 22₂ die Mehrzahl optisch-kabelloser Signale 12₁ und 12₂ räumlich verteilt als untereinander synchronisierte optisch-kabellose Signale 12₁ und 12₂ aussendet.

Die Mehrzahl von Transmittern 18₁, 18₂ und weiterer Transmitter kann als zusammenhängender Transmitterbereich 28 verstanden werden, der lediglich der Übersichtlichkeit halber größer dargestellt ist als die Summe der optischen Transmitter 18₁, 18₂ und beispielsweise als kleinstmögliche polygone Fläche verstanden werden kann, die durch die mit der Synchronisierungseinrichtung 24 und/oder Signalquelle 14 verbundenen optischen Transmitter 18₁, 18₂ auf einem einstückig oder mehrstückig gebildeten Trägersubstrat 32 der Vorrichtung 10 aufgespannt wird.

Die beschriebene Anordnung und Funktionsweise der Komponenten ermöglicht es, dass eine Relativbewegung einer Empfängervorrichtung 34 entlang einer Bewegungsrichtung 36 über mehrere Ausleuchtungsbereiche 38₁, 38₂ der jeweiligen optischen Transmitter 18₁ bzw. 18₂, welche zusammengenommen einen von den synchronisierten optisch-kabellosen Signalen 12₁ und 12₂ ausgeleuchteten Abdeckungsbereich 42 definieren können, mit einem nahtlosen Empfang optischer Signale einhergeht. Da die optischen Signale 12₁ und 12₂ synchronisiert sind, kann ein Signalsprung oder eine zeitliche Verschiebung innerhalb des empfangenen Signals oder dergleichen beim Übertritt des Empfängers 34 vom Ausleuchtungsbereich 38₁ zum Ausleuchtungsbereich 38₂ oder andersherum vermieden werden, was vorteilhaft ist.

Dabei ist es möglich aber nicht notwendig, dass die Bewegungsrichtung 34 entlang einer linearen Bahn verläuft, auch gekrümmte und insbesondere kreisförmige Bahnen sind möglich.

Die Vorrichtung 10 der Fig. 1 ermöglicht eine Übertragung elektrischer Energie und/oder Daten hin zum Empfänger 34. Dieser womöglich als einziger Kanal ausgebildete Kanal kann durch zusätzliche Kanäle hin zum Empfänger 34 zum Übertragen der jeweils anderen Option als Daten und Energie erweitert werden und/oder es können zusätzliche Kanäle zur Übertragung weiterer Daten oder zusätzlicher Energie angeordnet werden. In einer besonders bevorzugten Ausführungsform weist die Vorrichtung 10 optische Empfänger auf, um optisch-kabellose Signale von der Vorrichtung 34 zu empfangen.

Die Synchronisierungseinrichtung 24 kann ausgebildet sein, um unterschiedliche Laufzeiten des Signals bzw. verglichen zwischen den Signalen 22₁ und 22₂ hin zu den optischen Transmittern 18₁, 18₂ aktiv auszugleichen, etwa zu unterschiedlichen Zeiten auszusenden. Alternativ oder zusätzlich kann die Synchronisierungseinrichtung 24 ausgebildet sein, um unterschiedliche Distanzen zwischen der Signalquelle 14 und der Mehrzahl optischer Transmitter 18₁, 18₂ elektrisch passiv auszugleichen, etwa durch zusätzliche Laufzeitverzögerungen in einer vergleichsweise kürzeren direkten Strecke. Solche Laufzeitverzögerungen können bspw. durch zusätzliche Leitungslängen realisiert werden und/oder durch die Verwendung von Buffern, an deren Ausgangsseite eine übereinstimmende Laufzeitverzögerung zu den daran angeschlossenen optischen Transmittern erhalten wird.

Durch Angleichen der Leitungslänge und/oder durch geeignete, etwa mittige Wahl eines Orts eines Buffers kann erreicht werden, dass Signalleitungen zwischen der Mehrzahl von Signalausgängen der Signalquelle bzw. der Buffer einerseits und den mit den Signalausgängen gekoppelten optischen Transmittern andererseits eine im Wesentlichen übereinstimmende Leitungslänge aufweisen. Im Wesentlichen übereinstimmend kann beispielsweise eine Relativbeziehung zueinander umfassen, etwa innerhalb eines Toleranzbereichs von beispielsweise höchstens 100 % Abweichung, höchstens 90 % Abweichung oder höchstens 80 % Abweichung, kann sich aber auch genauso auf eine Abweichung unter Bezugnahme auf eine Bitlänge in einem optisch-kabellosen Datensignal beziehen, so dass beispielsweise die Abweichung der Leitungslänge zu einer Abweichung im zeitlichen Verlauf zwischen den optisch-kabellosen Signalen führt, welche höchstens 5 % einer Bitlänge, höchstens 10 % einer Bitlänge oder höchstens ein 35 % einer Bitlänge oder dergleichen bewirkt.

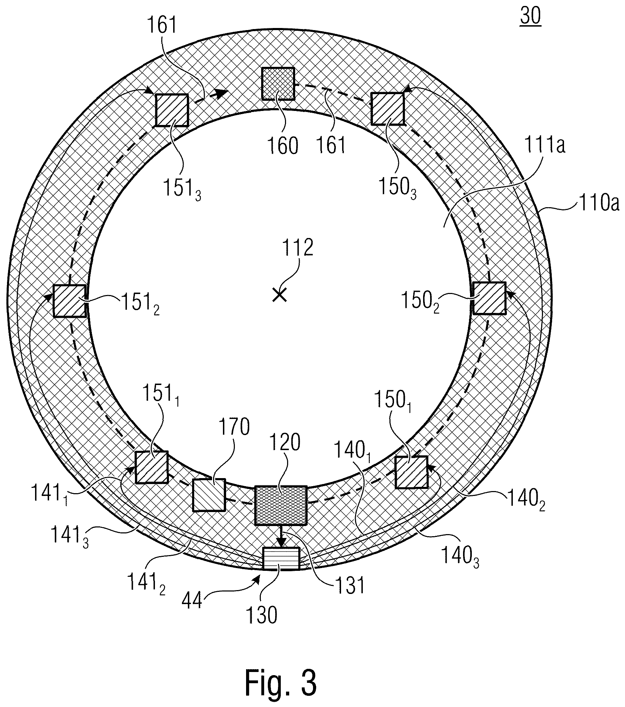

Alternativ oder zusätzlich können benachbarte optische Transmitter, die entlang unterschiedlicher Signalpfade ausgehend von der Signalquelle angeordnet sind, etwa Transmitter 150₃ und 151₃ der Fig. 3, einen im Wesentlichen gleichen Abstand und/oder Laufzeitverzögerung der Eingangssignale aufweisen. Durch beide Varianten kann ein Signalsprung den ein Receiver erfährt, der sich relativ zu der Vorrichtung bewegt, vermieden werden, etwa wenn der Receiver vom Signal des Transmitters 150₃ auf das Signal des Transmitters 151₃ oder andersherum wechselt.

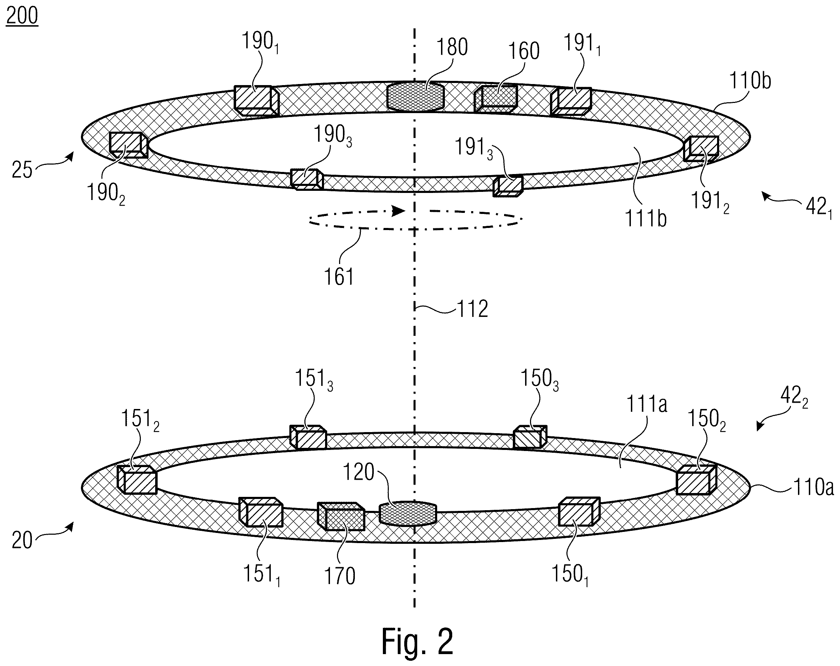

Fig. 2 zeigt eine schematische perspektivische Ansicht eines Systems 200 gemäß einem Ausführungsbeispiel mit zwei Vorrichtungen 20 und 25 gemäß Ausführungsbeispielen, die in Übereinstimmung mit der Vorrichtung 10 ausgeführt sind. Die Vorrichtungen 20 und 25 sind um eine gemeinsame Rotationsachse 112 beweglich angeordnet, wobei dies bedeuten kann, dass entweder die Vorrichtung 20 bezüglich der Vorrichtung 25 um die Rotationsachse 112 rotierbar gelagert ist oder die Vorrichtung 25 bezüglich der Vorrichtung 20 oder beide Vorrichtungen 20 und 25 um die Rotationsachse 112 beweglich gelagert sind, wobei dies eine übereinstimmende Drehrichtung oder inverse Drehrichtungen zueinander umfassen kann, so dass eine Bewegungsrichtung 36 der Fig. 1 hier als eine Pfeilbahn 161 dargestellt ist.

Beispielsweise umfasst die Vorrichtung 20 eine als Datenquelle und Datensenke eingerichtete Steuerungseinrichtung 120, die in Übereinstimmung mit der Signalquelle 14 sein kann. Ein entsprechendes Signal oder individuelle Signale können an optische Transmitter 150₁, 150₂, 150₃ sowie 151₁, 151₂ und 151₃ übermittelt werden, etwa indem eine jeweilige Signalleitung an einem beispielsweise ringförmigen Substrat 110a, das in Übereinstimmung mit dem Trägersubstrat 32 gebildet sein kann, angeordnet ist.

Die Transmitter 150 und 151 können in Übereinstimmung mit den optischen Transmittern 18₁, 18₂,... aus Fig. 1 gebildet sein. Die Synchronisationseinrichtung 24 der Fig. 1 kann beispielsweise Teil der Steuerungseinrichtung 120 sein, wobei im Rahmen der vorliegenden Offenbarung auch weitere Möglichkeiten beschrieben sind, die alternativ oder zusätzlich einsetzbar sind.

Durch eine möglicherweise aber nicht notwendigerweise äquidistante Anordnung der Transmitter 150, 151 an dem Ring 110a kann eine gleichmäßige Ausleuchtung eines Abdeckungsbereichs 42₁ erfolgen, in welchem sich der Ring 110b der Vorrichtung 25 befindet, insbesondere ein optischer Empfänger oder optischer Receiver 160 der Vorrichtung 25. So kann bei einer lückenlosen Abdeckung des Abdeckungsbereichs 42₁ dahingehend, dass der Ring 110b vollständig beleuchtet ist, erreicht werden, dass in jeglicher Rotationsstellung der Vorrichtungen 20 und 25 zueinander der optische Empfänger 160 zumindest eines der Signale der optischen Transmitter 150₁-150₃ und/oder 151₁-151₃ empfängt und ein Übertritt von einem Ausleuchtungsbereich zum anderen nahtlos erfolgen kann.

Die Anordnung der optischen Transmitter 150 und 151 zeigt dabei nicht einschränkend und lediglich zum besseren Verständnis eine beispielhafte Positionierung der optischen Transmitter in einer jeweiligen Hälfte des Rings 110a an.

Die Vorrichtung 25 kann äquivalent zur Vorrichtung 20 aufgebaut sein und korrespondierend zu den optischen Transmittern 150₁-150₃ sowie 151₁-151₃ optische Transmitter 190₁-190₃ sowie 191₁-191₃ aufweisen, die ebenfalls in Übereinstimmung mit den optischen Transmittern 18 der Vorrichtung 10 ausgeführt sein können. Durch eine Anordnung gleich oder ähnlich zur Vorrichtung 20 ist es möglich, dass ein optischer Empfänger 170 der Vorrichtung 20 in jeglicher Rotationsstellung der Vorrichtungen 20 und 25 zueinander zumindest eines der optisch-kabellosen Signale der Transmitter 190, 191 empfängt.

Die Vorrichtung 25 kann hierzu eine Steuerungseinrichtung 180 umfassen, die in Übereinstimmung mit der Signalquelle 14 der Fig. 1 gebildet sein kann. Die Synchronisationseinrichtung 24 der Fig. 1 kann beispielsweise Teil der Steuerungseinrichtung 180 sein, wobei im Rahmen der vorliegenden Offenbarung auch weitere Möglichkeiten beschrieben sind, die alternativ oder zusätzlich einsetzbar sind. Ein möglicher, optionaler aber nicht notwendiger freier Innenbereich oder Innendurchmesser 111a bzw. 111b der Vorrichtung 20 bzw. 25 kann es ermöglichen, die Vorrichtung 20 bzw. 25 um eine rotierbar-gelagerte Vorrichtung auch anzuordnen. Stehen sich alternativ oder zusätzlich einander rotierende Flächen gegenüber, kann der Innenbereich 111 auch unnötig sein oder nicht erforderlich sein.

Die Signalquellen 120 und 180 können im Falle der bidirektionalen Kombination beide jeweils auch als Datensenke gebildet sein und für eine Datenprozessierung ausgelegt sein. Für den Fall einer Energieübertragung kann eine entsprechende Anpassung der Einrichtung 120 und/oder 180 erfolgen. Hierin werden die Signalquellen bzw. Signalsenken 120 und 180 auch als Controller bezeichnet und im Falle der beschriebenen Ausgestaltung des Systems 200 können die Vorrichtungen 20 und 25 als Drehübertrager bezeichnet werden.

Ausführungsbeispiele der vorliegenden Erfindung ermöglichen einen kontaktlosen, optisch-drahtlosen bzw. optisch-kabellosen Drehübertrager für die Hochgeschwindigkeits-Kommunikation. Wie das Ausführungsbeispiel in Fig. 2 darstellt, umfasst der Drehübertrager, das heißt, das System 200, zwei sich gegenüberstehende Vorrichtungen 20 und 25, beispielsweise umfassend Ringstrukturen 110a und 110b. Die Ringe weisen einen optionalen freien Innenraum/Innendurchmesser 111a und 111b auf. Beide freie Innendurchmesser können gleich groß sein, wobei dies nicht erforderlich ist. Ein Ring, beide Ringe oder keiner der Ringe kann dabei um die Rotationsachse 112 rotieren. Die relative Drehung der Ringe zueinander ist durch die Pfeilbahn 161 gezeigt. Beide Ringe verfügen über eine Datenquelle bzw. Datensenke 120 bzw. 180. Jede Datenquelle/Datensenke kann ein Interface oder ein Controller-Blog sein oder diesen umfassen.

In einer unidirektionalen Ausführung befindet sich auf zumindest einem der Ringe 110a, 110b ein Sendering in Übereinstimmung mit Ausführungsbeispielen umfassend Sende-Blöcke 150₁, 150₂, 150₃, 151₁, 151₂, 151₃ oder 190₁, 190₂, 190₃, 191₁, 191₂, 191₃, je nachdem, ob bezogen von der Vorrichtung 20 auf die Vorrichtung 25 eine Hin-Richtung oder eine Rück-Richtung für das Senden optisch-kabelloser Signale gewählt wird. Eine bidirektionale Übertragung ist ohne Weiteres implementierbar wenn beidseitig jeweils Transmitter und zumindest ein Receiver angeordnet werden, wie in Fig. 2 dargestellt. Auf dem jeweils anderen Ring ist ein optischer Empfänger 160 oder 170 angeordnet, um positionsunabhängig eine Kommunikation innerhalb der Spezifikation, das heißt, der Betriebsanordnung sicherzustellen. In einer Ausführung für eine bidirektionale Kommunikation, wie sie in der Fig. 2 gezeigt ist, weisen beide Ringe eine Transmitter-Funktion und eine Empfänger-Funktion, das heißt, einen Transmitter-Teil und einen Receiver-Teil auf.

In anderen Worten zeigt die Fig. 2 ein Ausführungsbeispiel eines optisch-drahtlosen Drehübertragers, also eines Übertragungssystems, der zwei Ringe 110a, 110b mit einem freiem Innendurchmesser 111a und 111b umfasst. Einer der Ringe, beide oder keiner der Ringe können um die Rotationsachse 112 rotieren.

Fig. 3 zeigt eine schematische Draufsicht auf eine Vorrichtung 30 gemäß einem Ausführungsbeispiel, die beispielsweise die Vorrichtung 20 oder 25 des Systems 200 implementieren kann.

In der Draufsicht sind die optischen Transmitter 150₁-150₃ sowie 151₁-151₃ dargestellt, die sich entlang der Kreisbahn 161 zumindest als Relativbewegung einer gegenüberliegenden Vorrichtung bewegen können, wie es durch die Drehachse 112 gezeigt ist.

Ferner zeigt Fig. 3 die vorteilhafte Verwendung eines Buffers oder Signalpuffers 130 als zumindest Teil der Synchronisierungseinrichtung, beispielsweise der Synchronisierungseinrichtung 24 der Vorrichtung 10. Der Buffer 130 kann einen Signaleingang aufweisen, um von der Signalquelle 120 ein Signal 131 an dem Signaleingang zu empfangen. Hierzu ist der Signaleingang des Buffers 130 mit der Signalquelle 120 gekoppelt. Im Weiteren weist der Buffer eine Mehrzahl von Signalausgängen auf. Der Buffer 130 ist ausgebildet, um eine Mehrzahl von Bufferausgangssignalen über entsprechende Leitungen 140₁, 140₂, 140₃, 141₁, 141₂ und 141₃ an die Transmitter 150₁-150₃ sowie 151₁-151₃ basierend auf dem Signal 131 auszugeben. Die entsprechenden Signale können Eingangssignale 22 der Fig. 1 darstellen. Vorteilhaft an der Verwendung von Buffern ist, dass die Ausgangssignale synchronisiert bereitgestellt werden können, das heißt, die entsprechenden Signale an den Leitungen 140, 141 können untereinander synchronisiert sein. Dies ermöglicht es bei Strukturen und Datenübertragungsraten, die womöglich unterschiedliche Laufzeiten aufgrund unterschiedlicher Längen der Leitungen 140 untereinander und/oder 141 untereinander verursachen, eine entsprechende Synchronisierung unter Vernachlässigung der Laufzeitunterschiede zu erhalten.

Buffer, die im Rahmen hierin beschriebener Ausführungsbeispiele eingesetzt werden können, können einen Verstärkungsfaktor von empfangenem Signal zu bereitgestellten Signalen von in etwa 1 aufweisen. In manchen Ausführungsformen wird jedoch vorteilhaft ein Buffer eingesetzt, der für eine Signalverstärkung, d. h., mit einem Verstärkungsfaktor größer 1, bspw. zumindest 2, zumindest 3, zumindest 5 oder zumindest 10 eingerichtet ist, und/oder für eine Signalaufbereitung bspw. in Form einer Vorverzerrung, einer Entzerrung, einer Post-Emphasis und/oder einer Pre-Emphasis eingerichtet ist.

Anders ausgedrückt, wenn beispielsweise andere Einrichtungen wie Microcontroller oder dergleichen entsprechende Signale zu unterschiedlichen Zeitpunkten an unterschiedlichen Ausgängen bereitstellen würden, wäre es im Rahmen von Ausführungsbeispielen durch die Synchronisierungseinrichtung und hier am Beispiel des zwischengeschalteten Buffers ermöglicht, die entsprechenden Signale an den Leitungen 140 und 141 dennoch synchron auszugeben. Wie es nachfolgend noch beschrieben wird, können für den Fall, dass die Laufzeitunterschiede aufgrund der Leitungslängen auch kompensiert werden sollen, weitere Maßnahmen implementiert werden, etwa die Verwendung zusätzlicher Buffer und/oder eine vorteilhafte Positionierung des Buffers.

Mit der beschriebenen Ausgestaltung der Vorrichtung 30 ist es möglich, dass ein optischer Empfänger 160 einer gegenüberliegend angeordneten Vorrichtung, siehe Fig. 2, basierend auf der Lichtformung der optischen Transmitter 150, 151 und des damit womöglich eingestellten Betriebsabstands, stets das optische Signal zumindest eines der optischen Transmitter 150₁ bis 150₃, 151₁ bis 151₃ empfängt.

In anderen Worten zeigt Fig. 3 ein bidirektionales Ausführungsbeispiel schematisch von der Draufsicht. Es sind dabei im Wesentlichen die Komponenten des Rings 110a dargestellt und zusätzlich der Empfänger 160 des zweiten Rings. Alle Komponenten der Ringe befinden sich auf dem Träger/Substrat/der Leiterplatte 110a, 110b, die eine Ringstruktur aufweist, wobei insbesondere der freie Innendurchmesser 111, 111a, 111b charakteristisch ist. Der Controller-Block 120 agiert als Datenquelle und -senke. Das Datensignal wird direkt an die Teiltransmitter 150₁, 150₂, 150₃, 151₁, 151₂, 151₃ über die Signalleitungen 140₁, 140₂, 140₃, 141₁, 141₂, 141₃ verteilt. Werden viele Teiltransmitter angesteuert, ist es sinnvoll, einen zusätzlichen Buffer 130, welcher über die Signalleitung 131 verbunden ist, einzusetzen. Der Buffer zeichnet sich durch einen besonders geringen Jitter (<<500ps) zwischen den Kanälen aus. Die Datenleitungen 140₁, 140₂, 140₃, 141₁, 141₂, 141₃ sind in Bezug auf deren Länge so abgestimmt, dass die Daten gleichzeitig bei den Teiltransmittern ankommen und gesendet werden. Das von den Teiltransmittern gesendete Signal trifft auf einen Empfänger 160, welcher sich auf dem zweiten, ggf. gegenüberliegend angeordneten Ring befindet, wobei beide Ringe relativ zueinander rotierbar sein können. Es ist dabei denkbar, dass der Transmitter rotiert und der Receiver still steht. Es ist auch denkbar, dass der Transmitter still steht und der Receiver rotiert. Es ist aber auch denkbar, dass Transmitter und Receiver mit einer gleichen oder unterschiedlichen Geschwindigkeit miteinander oder gegeneinander rotieren oder gar still stehen. Der Pfeil 161 deutet die exemplarische Rotationsbewegung des Empfängers an. Die Rotationsachse 112 ist in diesem Entwurfsbeispiel in der Mitte des Systems.

Für einen bidirektionalen Daten-Link verfügt der Ring 110a ebenfalls über einen Receiver 170, der entlang des Rings platziert ist. Es ist vorteilig aber nicht zwingend notwendig, den Receiver 170 in der Nähe des Controllers 120 zu platzieren, um Datenleitungen möglichst kurz zu halten. Der Receiver 170 empfängt sein Signal von den Teiltransmittern 190₁, 190₂, 190₃, 191₁, 191₂, 191₃, welche auf dem Ring 110b sitzen.

Die Anzahl der dargestellten Teiltransmitter ist beispielhaft zu verstehen. In weiteren Ausführungsbeispielen können deutlich mehr Teiltransmitter, beispielsweise >10, >20, >50, >100 Teiltransmitter eingesetzt werden.

Ausführungsbeispiele sind weder auf die Anzahl von 2 optischen Transmittern gemäß Fig. 1 noch von 6 optischen Transmittern gemäß den Fig. 2 oder 3 beschränkt. Eine andere Anzahl von zumindest 2, etwa zumindest 3, zumindest 4, zumindest 5, zumindest 6, zumindest 8, zumindest 10 oder mehr optischen Transmittern ist ohne weiteres möglich.

In weiter anderen Worten sind entlang der Ringumlaufbahn 161 Teiltransmitter 150₁-151₃ angeordnet und auf einem gegenüberliegenden, nicht dargestellten Ring ein optischer Empfänger, Receiver 160, angeordnet.

Um den Jitter des Signals zwischen den Teiltransmittern minimal zu halten, ist es vorteilhaft, die Signalleitung möglichst gut in Bezug auf Leitungslänge und Impedanz abzustimmen, das heißt, die Einflüsse der Leitungslänge und der Impedanz sollten möglichst gleich sein und in Ausführungsbeispielen auf einander abgestimmt. Dabei bestimmt die Leitungslänge die Laufzeit, die das Signal benötigt die Wegstrecke zurück zu legen. Die Impedanz bestimmt inwiefern sich Reflexionen ergeben, die zu Signalverzerrungen führen können. Die Signalleitungen 140₁, 140₂, 140₃, 141₁, 141₂, 141₃ können als Einzeldraht oder differentiell ausgeführt sein. Eine differentielle Signalführung erlaubt eine größere Immunität gegenüber äußeren Störeinflüssen, also eine bessere elektromagnetische Verträglichkeit. Die elektromagnetische Verträglichkeit kann weiter verbessert werden, indem die Signalleitungen 140₁, 140₂, 140₃, 141₁, 141₂, 141₃ geschirmt werden. Dies kann mittels dediziertem Schirm erreicht werden, oder indem die Signalleitungen auf den Zwischenlagen der Leiterplatte geführt werden (das heißt, die äußeren Kupferlagen dienen möglicherweise als flächiger ESD- und EMI-Schirm). Ein weiterer Vorteil von Signalleitungen innerhalb der Leiterplatte des Substrats 110a, 110b sind die fertigungsspezifisch genaueren Toleranzen von Innenlagen.

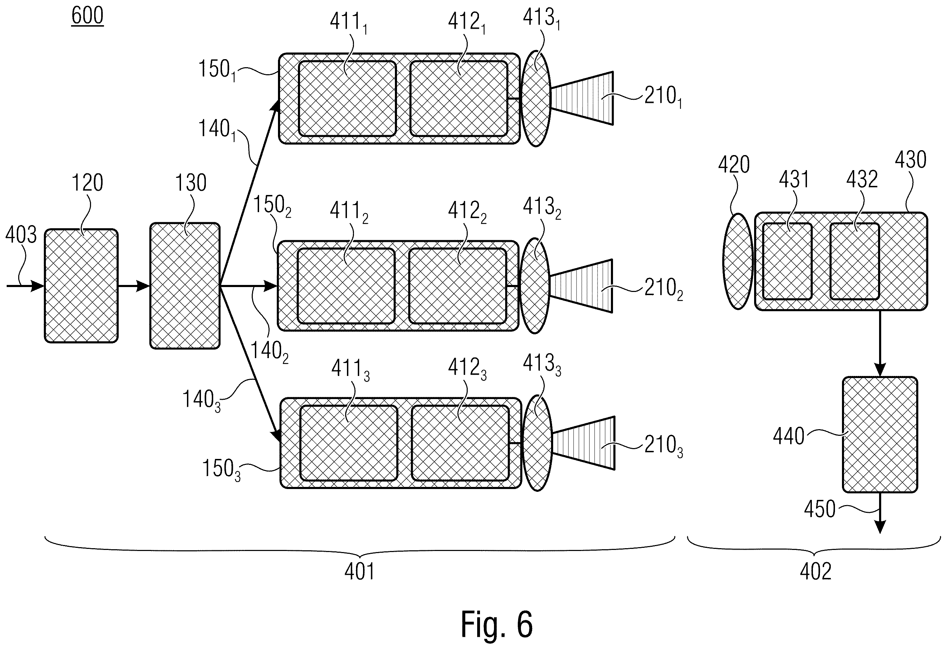

Der Controller-Block 120 umfasst namensgebend beispielhaft einen Mikrocontroller oder Field-Programmable Gate Array (FPGA), einen applikationsspezifischen integrierten Schaltkreis (ASIC) oder eine vergleichbaren Recheneinheit zur Datenverarbeitung- und Generierung, sowie womöglich nachfolgender Signalverstärker. Die Signalverstärker auf der Sendeseite können dabei adaptiv von der Signalquelle bzw. dem Controller 120 oder 180 angesteuert werden, um bei geringer Auslastung des Datenkanals Strom zu sparen oder die Lebensdauer der Komponenten zu erhöhen. Der Verstärker der Empfängerseite 170 befindet sich nah an Block 120, wie in Fig. 6 anhand des Verstärkers 432 und des Controller-Blocks 400 gezeigt wird. Die Auswahl des Controller-Blocks 120 beeinflusst dabei die mögliche Datenrate sowie den Umfang weiterer optionaler Funktionen, wie z.B. der adaptive Sender.

Die Teiltransmitter 150₁, 150₂, 150₃, 151₁, 151₂, 151₃ werden in einer vorteilhaften aber nicht einschränkenden Ausführungsform so platziert, dass ein gegenüberstehender Empfänger 160 unabhängig von der Position stets das Signal von mindestens einem Teiltransmitter 150₁, 150₂, 150₃, 151₁, 151₂, 151₃ detektiert. Optisch deckt jeder Teiltransmitter einen Teilbereich des Rings ab.

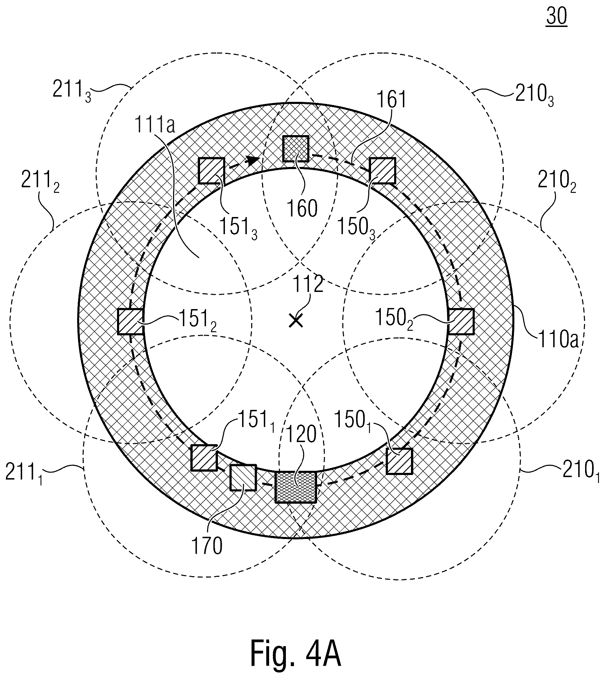

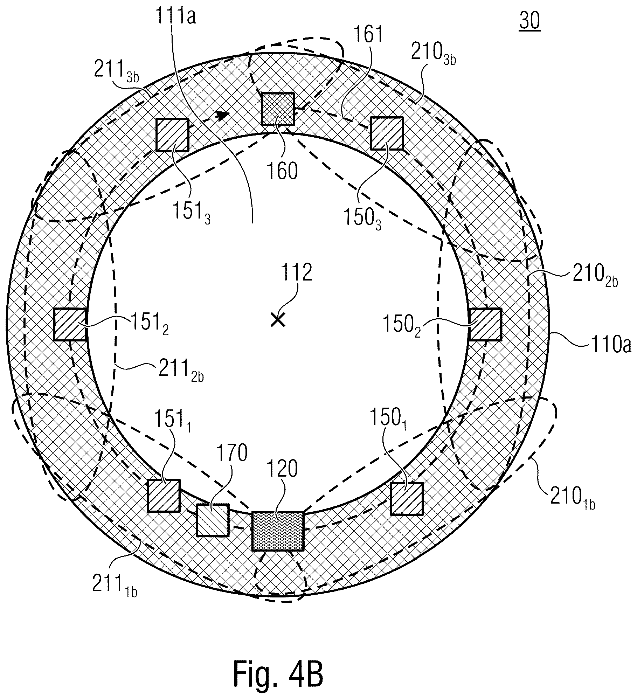

Fig. 4a zeigt ein Ausführungsbeispiel, bei dem jeder Teiltransmitter 150₁, 150₂, 150₃, 151₁, 151₂, 151₃ einen kreisförmigen Bereich 210₁, 210₂, 210₃, 211₁, 211₂, 211₃ abdeckt, was über die Abstrahlcharakteristik einstellbar ist. Dabei überlappen sich die einzelnen Bereiche 210₁, 210₂, 210₃, 211₁, 211₂, 211₃ der Teiltransmitter möglicherwiese, um einen sicheren Übergang des gegenüberliegenden Empfängers 160, 430 von Teiltransmitter zu Teiltransmitter zu gewährleisten. Wie Fig. 4b zeigt, kann der Abdeckungsbereich des Teiltransmitters auch andersförmig, beispielsweise elliptisch sein, siehe Ausleuchtungsbereiche 210_{1b}, 210_{2b}, 210_{3b}, 211_{1b}, 211_{2b}, 211_{3b}. Die Form der Ausleuchtungsberieche oder synonym Abdeckungsbereiche wird beispielsweise durch in Fig. 6 dargestellt optische Emitter 412₁, 412₂, 412₃, ..., im Sender selbst oder durch zusätzliche Linsen, Mehrwegelinsen oder Spiegel 413₁, 413₂, 413₃, ... und/oder andere optisch wirksamen Elemente wie einen Reflektor und/oder einen Diffusor umfasst, die Teil zumindest eines optischen Transmitters sein können, um von dem optischen Transmitter basierend auf dem Eingangssignal erzeugtes Licht optisch zu formen, beispielsweise zu kollimieren und/oder zu streuen. Es können hierzu unterschiedliche Motivationen zugrunde liegen, beispielsweise den Ringbereich bzw. die Bewegungsbahn besser ausleuchten; die Strahlen zu kollimieren, etwa damit die optischen Laufzeitunterschiede minimal sind oder Unterschiede vermieden werden, die aufgrund eines Auseinanderlaufes des Strahlenbündels von einem Bündelzentrum zu einem Bündelrand entstehen würden, und/oder die Augensicherheit erhöhen, so dass die optische Leistung pro Transmitter erhöht werden kann, um pro Transmitter einen größeren Bereich abzudecken. In einer solchen Ausgestaltung kann zumindest einer der optischen Transmitter eine Mehrwegelinse umfassen, die ausgebildet ist, um eine Lichtleistung von dem optischen Transmitter basierend auf dem Eingangssignal erzeugten Lichts in mehrere Teillichtbündel aufzuteilen. Eine derartige Mehrwegeoptik ist beispielsweise in DE 10 2020 206 180 A1 beschrieben.

Besonders vorteilhaft ist es, wenn der Abdeckungsbereich gut mit der Kreisumlaufbau des gegenüberliegenden Empfängers 160, 420/430 übereinstimmt. Geeignet ist der Einsatz einer Linse oder eines Spiegels, welche die Ausdehnung der scheinbaren Quelle der einzelnen Lichtemitter vergrößern, wie es beispielsweise bei einer Mehrwegelinse der Fall ist. So ist es möglich, unter dem Gesichtspunkt der Augensicherheit, die Leistung pro Teiltransmitter 150₁, 150₂, 150₃, 151₁, 151₂, 151₃ zu erhöhen, was einen Teiltransmitter mit einem größeren Abdeckungsbereich ermöglicht. Dadurch kann die Anzahl der Teiltransmitter reduziert und Kosten gespart werden.

Fig. 4a zeigt eine schematische Draufsicht auf die Vorrichtung 30 gemäß Fig. 3, wobei Abstrahlbereiche 210₁-210₃ sowie 211₁-211₃ der optischen Transmitter 150₁-150₃ sowie 151₁-151₃, etwa die Abdeckungsbereiche 38 der Vorrichtung 10, kreisförmig ausgebildet sind, was eine optionale, jedoch nicht erforderliche Ausgestaltung ist. Die Bereiche 210 und 211 sind beispielsweise am Ort der gegenüberliegenden Empfängervorrichtung, beispielsweise die Vorrichtung 25 bezogen auf die Vorrichtung 20 oder die Vorrichtung 20 bezogen auf die Vorrichtung 25, dargestellt und insbesondere für ein Szenario, bei dem der optische Empfänger 160 der gegenüberliegenden Vorrichtung zu jedem Zeitpunkt der Relativbewegung entlang der Kreisbahn 161 Licht von zumindest einem der optischen Transmitter 150, 151 je empfangen kann.

**In** anderen Worten zeigt Fig. 4a ein Ausführungsbeispiel eines Transmitterrings, wobei jeder Teiltransmitter 150₁, 150₂, 150₃, 151₁, 151₂ und 151₃ einen kreisförmigen Bereich 210₁, 210₂, 210₃, 211₁, 211₂ und 211₃ abdeckt, in dem der gegenüberliegenden Receiver 160 ein Signal empfangen kann.

In Fig. 4b ist eine Ausführungsform gezeigt, bei der unter Anwendung vorangehend erläuterter Möglichkeiten jeder Teiltransmitter 150₁, 150₂, 150₃, 151₁, 151₂ und 151₃ einen beispielhaften elliptischen Bereich 210_{1,b}, 210_{2,b}, 210_{3,b}, 211_{1,b}, 211_{2,b} und 211_{3,b} abdeckt, in welchem der gegenüberliegende Receiver ein Signal empfangen kann. Andere Formen der Abdeckungsbereiche 210, 211 sind ohne weiteres möglich. Auch ist es möglich, optische Transmitter mit voneinander abweichenden Geometrien der Abdeckungsbereiche auszugestalten.

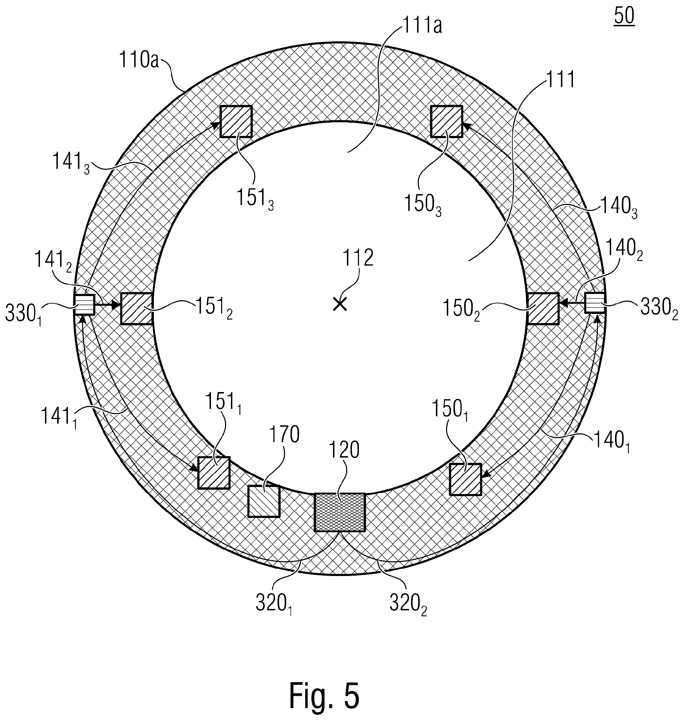

Fig. 5 zeigt eine schematische Draufsicht auf eine optische Vorrichtung 50 gemäß einem Ausführungsbeispiel, die gegenüber der Vorrichtung 30 mehrere Modifikationen aufweist, die einzeln, gruppenweise oder gemeinschaftlich implementiert werden können, aufeinander aber nicht angewiesen sind.

So ist beispielsweise die Signalquelle 120 ausgebildet, um das in Fig. 1 beschriebene Signal 16 an zwei oder mehr Datenleitungen 320₁ und 320₂ bereitzustellen. Ferner ist anstelle lediglich eines Buffers 130 der Vorrichtung 30 eine Mehrzahl oder gar Vielzahl an Buffern vorgesehen, beispielsweise Buffer 330₁ und 330₂, die in Übereinstimmung mit dem Buffer 130 gebildet sein können.

Jeder der Buffer 330₁ und 330₂ ist mit einer Teilmenge der Gesamtzahl optischer Transmitter 150₁-150₃ sowie 151₁-151₃ gekoppelt, was es ermöglicht, die Länge der Datenleitungen zwischen Buffer und optischem Transmitter vergleichsweise kurz zu halten. Alternativ zu einer Aufteilung von exemplarisch sechs optischen Transmittern in zwei Gruppen zu je drei optischen Transmittern ist auch eine andere Aufteilung möglich, beispielsweise eine Anzahl von 3 Buffern, die mit jeweils zwei optischen Transmittern gekoppelt sind oder hiervon verschieden, auch unter Berücksichtigung einer möglichen anderen Anzahl von optischen Transmittern insgesamt. Auch ist es möglich, weitere, zusätzliche Buffer vorzusehen und diese beispielsweise in einer kaskadierten Anordnung einzusetzen. So könnte beispielsweise ein nicht dargestellter weiterer Buffer mit der Signalleitung 131 der Fig. 3 gekoppelt sein oder mit einer der Signalleitungen 320₁ oder 320₂ der Fig. 5 und dann seinerseits zwei oder mehr Buffer mit Eingangssignalen versorgen.

Die in der Fig. 5 dargestellten Teilmengen der optischen Transmitter, beispielsweise optische Transmitter 150 einerseits und 151 andererseits, können eine Transmitterfläche, etwa beispielsweise eine Grundfläche des Substrats oder Rings 110a, zusammengenommen vollständig bedecken oder abdecken und die jeweilige Teilmenge 150, 151 im Wesentlichen Teilflächen der Transmitterfläche in gleicher Größe bedecken. In der Darstellung der Fig. 5 könnten dies beispielsweise Hälften des Rings 110a sein.

In anderen Worten, wie Fig. 5 beispielhaft zeigt, kann das Signal vom Controller-Block 120 auch über mehrere Datenleitungen 320₁, 320₂ an mehrere Buffer 330₁, 330₂ verteilt werden. Durch eine Nutzung von mehreren Buffern 330₁, 330₂, ... können mehr Teiltransmitter 150₁, 150₂, 150₃, 151₁, 151₂, 151₃ angesprochen oder eine größere Entfernung zwischen den Teiltransmittern realisiert werden. Bei einer großen Anzahl von Teiltransmittern (> 10, >20, > 50, >100) ist es denkbar, die Buffer zu kaskadieren und hintereinander zu schalten. Um die absoluten Leitungslängen und den Jitter zu verringern, erweist es sich als vorteilhaft, wenn man den Buffer 130, 330₁, 330₂, ... stets in der Mitte des Abschnitts platziert, den der Buffer abdecken soll. In Fig. 3 bedeutet dies, dass der Buffer 130 in der Mitte sitzt und in beide Richtungen je eine Ringhälfte abdeckt. In Fig. 5 deckt ein Buffer 330₁, 330₂, ..., 330ₙ beispielsweise je eine Ringhälfte oder einen gleichgroßen n-fachen Teil des Rings ab und wird vorteilhaft in der Mitte der entsprechenden Ringhälfte oder des n-fachen Teilstücks platziert. In einer Ausgestaltung wo die Buffer mehrfach kaskadiert werden, können die Buffer in der Mitte derer Teiltransmitter angeordnet werden, die kontaktiert werden sollen. So kann sich für jeden Teiltransmitter eine nahezu identische Gesamtleitungslänge und durch den Einsatz der Buffer ein gleichwertiges Datensignal ergeben.

In der Regel sind Bauräume auch für Leitungsführungen begrenzt. Ungeachtet dessen sehen Ausführungsbeispiele durchaus vor, zusätzliche Leitungslängen zu implementieren, um beispielsweise die Laufzeitabweichung zwischen einem Buffer 330₁ und dem optischen Transmitter 151₁ einerseits und dem Buffer 330₁ und dem optischen Transmitter 151₃ andererseits weiter zu reduzieren.

In weiter anderen Worten zeigt Fig. 5 ein Ausführungsbeispiel des Transmitterrings mit je einem Buffer 330₁ und 330₂ für jede Ringhälfte.

Fig. 6 zeigt ein schematisches Blockschaltbild zumindest eines Teils einer Systemanordnung hierin beschriebener Ausführungsbeispiele. Das System 600 umfasst beispielsweise eine Vorrichtung 401, die unter Verwendung der optischen Transmitter 150₁, 150₂ und 150₃ mehrere zueinander synchronisierte optische Signale 210₁, 210₂ und 210₃ aussenden, wobei die optischen Signale 210₁-210₃ in Übereinstimmung mit den optisch-kabellosen Signalen 12 sein können.

In anderen Worten zeigt Fig. 5 ein Ausführungsbeispiel eines Transmitterrings mit je einem Buffer für jede Ringhälfte.

Fig. 6 zeigt ein schematisches Blockschaltbild eines Systems 600 gemäß einem Ausführungsbeispiel, bei dem ein Vorrichtung 401, beispielsweise als ein hierin beschriebener Transmitterring 20, 25, 30 und/oder 50 mit je einem Buffer 330₁ und 330₂ für jede Ringhälfte ausgestaltet ist. In Fig. 6 zeigt das kombinierte Blockschaltbild einer im Rahmen der Ausführungsbeispiele liegenden Teiltransmitter-Strecke. Es zeigt einen beispielhaften Transmitterteil 401 mit Receiver 402, beispielsweise eine Vorrichtung mit dem optischen Empfänger 160, welche ohne Weiteres identisch oder als spiegelnde Vorrichtung zur Vorrichtung 401 gebildet sein kann, etwa um eine bidirektionale Übertragung einzurichten.

Der Controller-Block 120 besitzt möglicherweise ein Eingangsinterface zum Empfang eines Eingangssignals 403, über den der Controller-Block 120 Daten empfangen kann, wobei dies beispielsweise unter Verwendung eines Speichers des Controllers 120 optional ist. Der Controller-Block 120 sendet das Signal zu einem optionalem Buffer 130, der das elektrische Signal über die Signalleitungen 140₁, 140₂, 140₃ an die Teiltransmitter 150₁, 150₂, 150₃ verteilt. Die Teiltransmitter 150₁, 150₂, 150₃ bestehen aus einem optionalen Buffer-/Treiberschaltkreis 411₁, 411₂, 411₃ und einem optischen Emitter 412₁, 412₂, 412₃, beispielsweise einer Leuchtdiode (LED), oder einem Laser (beispielsweise Laserdiode, wie beispielsweise einem vertical cavity surface emitting laser, kurz VCSEL) und je einer optionalen Linse 413₁, 413₂, 413₃ und erzeugen die Abdeckungsbereiche 210₁, 210₂, 210₃, 210_{1b}, 210_{2b}, 210_{3b}.

Der Receiver 402 umfasst eine optionalen Linse 420, die ausgebildet ist, um das einfallende Signal auf den Empfänger 430 zu fokussieren. Der Empfänger umfasst einen Photodetektor 431 und einem optionalen Verstärker 432. Bei dem Verstärker 432 handelt es sich beispielsweise um einen Transimpedanzverstärker oder einen Spannungsverstärker. Das Signal wird dann an einen Controller-Block 440, etwa der Controller-Bloc 180, gesendet, der ausgebildet ist, um das Signal zu dekodieren bzw. über ein optionales Interface 450 weiterzuleiten. In anderen Worten zeigt Fig. 6 eine schematische Darstellung eines Ausführungsbeispiels eines beispielhaften Transmitters 401 und Receivers 402.

Es ist vorteilhaft für die Signalqualität, die Fehlerrate, die Zuverlässigkeit, für das Alterungsverhalten und für die Kosten, wenn der Empfangspegel über eine volle Umdrehung hinweg so wenig wie möglich variiert. Üblicherweise sind die Abdeckungsbereiche 210₁, 210₂, 210₃, 211₁, 211₂, 211₃, 210_{1b}, 210_{2b}, 210_{3b}, 211_{1b}, 211_{2b}, 211_{3b} allerdings nicht homogen ausgeleuchtet. In der Folge ist bspw. der Signalpegel sehr hoch, wenn der Receiver 160 einem Teiltransmitter gegenübersteht und sehr gering, wenn der Receiver sich mittig, zwischen zwei Teiltransmittern, befindet.

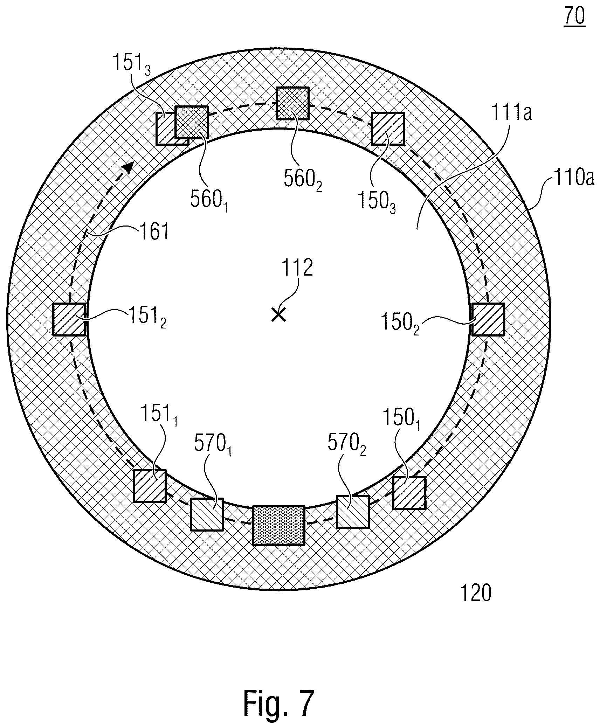

Fig. 7 zeigt in einer schematischen Draufsicht auf eine Vorrichtung 70 gemäß einem Ausführungsbeispiel, dass dieser Problemstellung auch begegnet werden kann, indem zwei Receiver 560₁, 560₂ bzw. 570₁, 570₂, etwa in Übereinstimmung mit dem optischen Empfänger 34, 20, 25 und/oder 402 eingesetzt werden. Anders ausgedrückt, zeigt Fig. 7 eine schematische Darstellung eines Ausführungsbeispiels eines Drehübertragers mit zwei Receivern 560₁, 560₂.

Es ist auch denkbar die Receiveranzahl noch weiter zu erhöhen. Besonders vorteilig für den Empfangspegel ist es nun, wenn die Receiver 560₁, 560₂, etwa in Übereinstimmung mit dem optischen Empfänger 160 und/oder 170 und/oder 430 genau oder im Wesentlichen, d. h., innerhalb eines Toleranzbereichs von höchstens 20 %, höchstens 10 % oder weniger, bspw. höchstens 5 % den halben Abstand von zwei Teiltransmittern aufweisen bzw. ein ungerades ganzzahliges Vielfaches des halben Abstandes von zwei Transmittern. So kann sichergestellt werden, dass immer einer der beiden Receiver 560₁, 560₂ ein ausreichend starkes Signal detektiert, wenn der andere gerade eine ungünstige Position mit niedrigem Empfangspegel aufweist. Auf diese Weise ist es sogar möglich, dass die Teiltransmitter gar nicht den vollen Ring ausleuchten, sondern auch Unterbrechungen aufweisen können.

Werden mehrere Receiver 560₁, 560₂ eingesetzt, kann möglicherweise die Anzahl der Teiltransmitter reduziert werden, um die Kosten und die Leistungsaufnahme zu senken. In einer derartigen Ausgestaltung bei einer Verwendung mehrerer optischer Empfänger kann ein System gemäß einem Ausführungsbeispiel einen ersten optischen Empfänger und einen benachbarten zweiten optischen Empfänger mit einen Abstand aufweisen, der im Wesentlichen hälftig zu einem Abstand zwischen zwei benachbarten optischen Transmittern der ersten Vorrichtung ist. Die empfangende Vorrichtung kann eine Verstärkerschaltung, etwa den Verstärker 432 aufweisen, die mit dem ersten optischen Empfänger und dem zweiten optischen Empfänger gekoppelt ist, um ein erstes Empfängersignal des ersten optischen Empfängers und ein zweites Empfängersignal des zweiten optischen Empfängers zu verstärken. Alternativ oder zusätzlich kann eine jeweilige Verstärkerschaltung für individuelle optische Empfänger der Vorrichtung vorgesehen sein, wobei eine erste Verstärkerschaltung ausgebildet ist, um ein erstes Empfängersignal des ersten optischen Empfängers zu verstärken, um ein erstes verstärktes Signal zu bereitzustellen; und eine zweite Verstärkerschaltung ausgebildet ist, um ein zweites Empfängersignal des zweiten optischen Empfängers zu verstärken, um ein zweites verstärktes Signal zu bereitzustellen. Eine Verarbeitungseinrichtung, etwa der Controller 440, 120, 180 oder die Signalquelle 14 kann in einer derartigen Ausgestaltung zum Kombinieren des ersten verstärkten Signals und des zweiten verstärkten Signals eingerichtet sein. Es kann also eine Kombination im Controller und nach der Verstärkerschaltung (bspw. durch Addieren der Signale) erfolgen. Alternativ oder zusätzlich können zwei oder mehrere optische Empfänger mit einer individuellen ersten Verstärkerschaltung bzw. zweiten Verstärkerschaltung ausgestattet sein, die ausgebildet ist, um ein erstes Empfängersignal des ersten optischen Empfängers zu verstärken, um ein erstes verstärktes Signal zu bereitzustellen; und mit einer zweiten Verstärkerschaltung, die ausgebildet ist, um ein zweites Empfängersignal des zweiten optischen Empfängers zu verstärken, um ein zweites verstärktes Signal zu bereitzustellen. Die Empfängervorrichtung kann eine Verarbeitungseinrichtung, etwa der Controller 440, 120, 180 oder die Signalquelle 14, aufweisen, die ausgebildet ist, um eine Datenverarbeitung verstärkter Signale auszuführen und für die Datenverarbeitung eines aus dem ersten verstärkten Signal und dem zweiten verstärkten Signal auszuwählen. Es kann bspw. eine Auswahl des weiter prozessierten Signals basierend auf eine Signalqualität oder das Überschreiten einer Signalmindestqualität für ein nachfolgendes optisches Signal erfolgen oder dergleichen. Ein Umschalten kann zu einem geeigneten und vorbestimmten Zeitpunkt erfolgen, etwa zwischen Datenpaketen. Es ist denkbar hierfür bspw. einen time sensitive networking (TSN) Standard zu verwenden.

Anders ausgedrückt, kann es sich bei den Receivern 560₁, 560₂, ... um zwei oder mehr eigenständige Receiver mit eigenem Photodetektor, Verstärkerschaltung und Controller handeln. Es ist aber auch denkbar, dass zwei oder mehr Photodetektoren an den selben Verstärker angeschlossen werden und das kombinierte Signal dann vom Controller verarbeitet wird. Es ist auch denkbar, dass jeder der Photodetektoren einen separaten Transimpedanzverstärker hat und deren Ausgangssignale anschließend addiert werden. Diese Variante ist vorteilig für die Bandbreite der Transimpedanzverstärkerstufe. Zwar erhöht sich auf diese Weise das Rauschen im Signal, aber der Mehrwert gegenüber dem stark variierendem Empfangspegel ist deutlich größer.

Eine weitere Alternative sieht vor, dass eine Optik (bspw. optische Faser oder Strahlenoptik) genutzt wird, um die zwei Eingangsaperturen für die Receiver 560₁, 560₂ zu erzeugen. Das Signal trifft dort auf die Optik auf und wird dann zu einem einzelnen Photodetektor für die Receiver 560₁, 560₂ geleitet, der sich bspw. in der Mitte beider Aperturen befindet. Das Signal wird nachfolgend verstärkt und von einem Controller verarbeitet. Vorteilig an diesem Konzept ist, dass nur ein Photodetektor, Verstärker und Controller benötigt wird.

Gerade wenn mehr als zwei Receiver eingesetzt werden, können die Konzepte auch kombiniert werden.

Modifikationen hierin beschriebener Ausführungsbeispiele sind auch, alternativ oder zusätzlich zu anderen Modifikationen hinsichtlich der Transmitter-Receiver-Anordnung möglich. In den Ausführungsbeispielen der Fig. 3, 4a, 4b, 5, und/oder 7 können die Teiltransmitter 150₁, 150₂, 150₃, 151₁, 151₂, 151₃, 190₁, 190₂, 190₃, 191₁, 191₂, 191₃ und der Receiver 160, 170 in einem ähnlichen oder gar gleichen Abstand zur Rotationsachse 112 angeordnet, das heißt, der radiale Abstand ist im Wesentlichen gleich. Dies ist vorteilhaft, beispielsweise für einen kleinen Bauraum oder Mehrkanal-Drehübertrager. Natürlich kann das System aber auch anders ausgeführt werden, das heißt, die der Abstand der Teiltransmitter und der Receiver zur Rotationsachse 112 kann beliebig sein.

Eine mögliche Abwandlung hierin beschriebener Ausführungsbeispiele ist die Bereitstellung zumindest eines weiteren Kanals zur Energieübertragung oder Datenübertragung für den Erhalt eines Multikanal-Systems. Um noch höhere Datenraten oder separierte Kommunikationskanäle breitzustellen ist es denkbar den Drehübertrager als Multikanal-Drehübertrager auszuführen.

Hierbei können mehreren Ringe radial nebeneinander angeordnet werden, das heißt, je weiter ein Kanal von der Rotationsachse 112 entfernt ist, desto größer ist dessen Ringdurchmesser. Gegebenenfalls muss in einem solchen System die Anzahl der Teiltransmitter oder Receiver nach außen hin erhöht werden. Für eine derartige Anordnung ist es vorteilig, wenn die Teiltransmitter 150₁, 150₂, 150₃, 151₁, 151₂, 151₃, 190₁, 190₂, 190₃, 191₁, 191₂, 191₃ und die Receiver 160, 170 den gleichen oder einen ähnlichen radialen Abstand aufweisen. Es ist auch denkbar, dass benachbarte Kanäle sich hinsichtlich ihrer Wellenlänge unterscheiden, um optisches Übersprechen zu vermeiden. Um Übersprechen zu reduzieren kann auch ein abschattendes Element, beispielsweise ein Ring/Wand/Filter zwischen den Kanälen eingebracht werden.

Gemäß einem Ausführungsbeispiel weist in einem hierin beschriebenen System zumindest die Empfängervorrichtung und/oder die Sendervorrichtung der zweiten Vorrichtung eine weitere Mehrzahl von synchronisierten optischen Transmitters auf, um einen zweiten optisch-kabellosen Kommunikationskanal bereitzustellen.

Die Anzahl der Kanäle kann auch gesteigert werden, etwa indem Drehübertrager gestapelt werden beispielsweise entlang der Rotationsachse 112.

In manchen Ausführungsbeispielen, etwa der Fig. 2, 3, 4a, 4b und/oder 5 kann die Datenübertragung parallel zur Rotationsachse stattfinden. Es ist auch denkbar beispielsweise senkrecht zur Rotationsachse zu kommunizieren, beispielsweise in radiale Richtung nach außen oder innen. Beispielsweise haben dann die Teiltransmitter einen kleinen Ringdurchmesser als der zugehörige Receiver oder andersherum. Um in diesem Fall einen bidirektionalen Kanal zu realisieren, könnten zwei dieser unidirektionalen Ringe gestapelt werden. Alternativ könnte diese auch radial nebeneinander platziert werden, das heißt, der Hin-Kanal hätte einen anderen radialen Abstand zur Rotationsachse.

Alternativ oder zusätzlich zur Datenübertragung kann ein hierin beschriebenes System ausgebildet sein, um elektrische Energie basierend auf zumindest einem optisch-kabellosen Energiesignal und von einer ersten zu einer zweiten Vorrichtung oder von der zweiten zur ersten Vorrichtung zu übertragen, das heißt, eine Energieübertragung kann optisch-kabellos realisiert werden. Die optische Energieübertragung hat unter anderem den Vorteil einer Störunanfälligkeit von und nach außen. Außerdem ermöglicht die optisch-kabellose Energie eine galvanische Trennung, das heißt, eine elektrische Isolation. Im Gegensatz zur optisch-kabellosen Datenübertragung ist die optisch-kabellose Energieübertragung typischerweise unidirektional ausgeführt. In welche Richtung Energie übertragen wird ist hierbei beliebig.

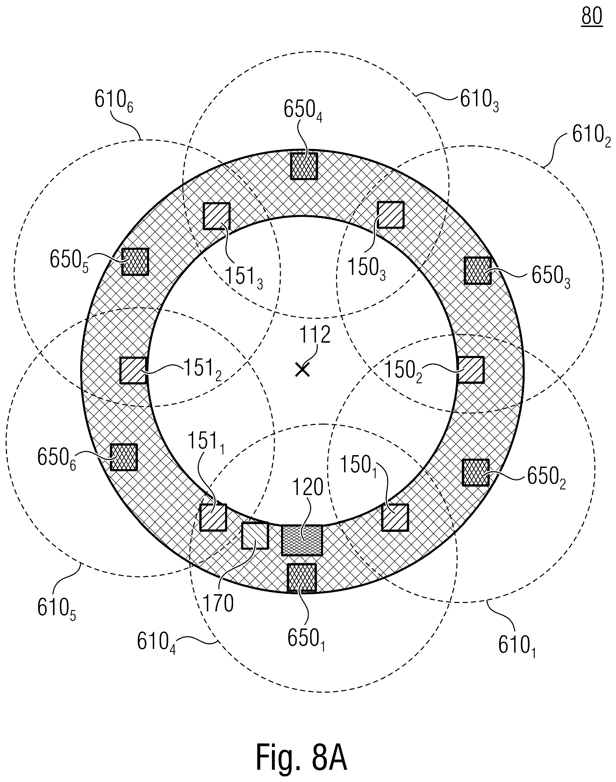

Fig. 8a zeigt eine schematische Draufsicht auf einen derartigen Sendering des Drehübertragers mit optisch-kabellose Energieübertragung. Dieser verfügt neben den hierin optionalen optischen Transmittern 150 und 151 über zusätzliche optische Emitter 650₁, 650₂, 650₃, 650₄, 650₅, 650₆. Dabei kann es sich beispielsweise um LEDs, Laserdioden (beispielsweise VCSEL) oder ähnliche Komponenten handeln. Die zusätzlichen Emitter können entlang des Rings angeordnet und vorzugsweise so, dass deren Abdeckungsbereiche 610₁, 610₂, 610₃, 610₄, 610₅, 610₆ den gesamten Ringumlauf abdecken. In andern Worten zeigt Fig. 8a eine schematische Darstellung eines Ausführungsbeispiels eines Senderings eines Drehübertragers mit zusätzlicher Energieübertragung über die optischen Emitter 650₁, 650₂, 650₃, 650₄, 650₅, 650₆.

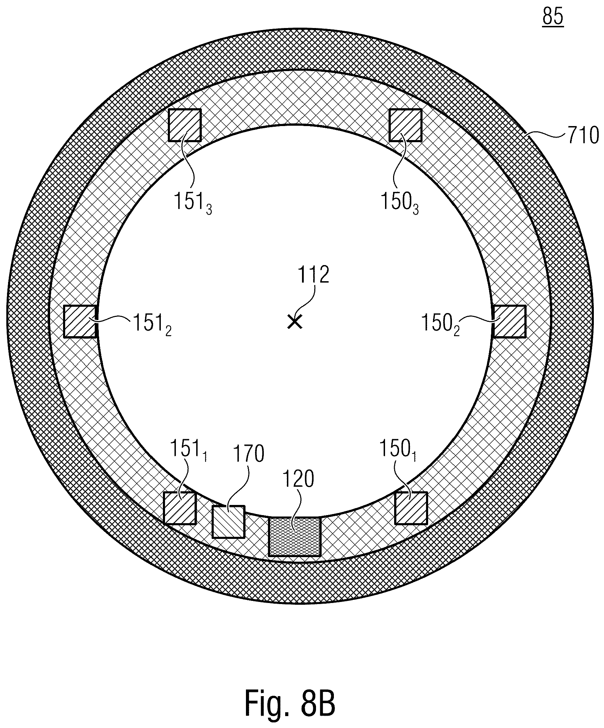

Fig. 8b zeigt eine schematische Draufsicht auf einen Empfangsring des Drehübertragers mit optisch-kabelloser Energieübertragung dar. Beispielsweise um den Bereich, der für die Datenübertragung genutzt wird, herum, kann ein oder mehrere zusätzliche Detektoren 710 angeordnet werden, um die optische Leistung der optische Emitter 650₁, 650₂, 650₃, 650₄, 650₅, 650₆ zu detektieren und in eine elektrische Leistung zu wandeln. Bei dem Detektor 710 kann es sich beispielsweise um eine oder mehrere Photovoltaikzellen handeln. Die Form des Detektors ist nur beispielhaft und kann beliebig sein. Die Detektoren können auch zwischen den Sende- und Empfangselementen verteilt werden. In anderen Worten zeigt Fig. 8b eine schematische Darstellung eines Ausführungsbeispiels eines Empfangsrings eines Drehübertragers mit dem zusätzlichen Detektor 710.

Obwohl manche Ausführungsbeispiele so beschrieben sind, dass die Anordnung der optischen Transmitter und Empfänger in einer Kreisbahn erfolgt, ist auch eine Ellipse, eine Gerade oder eine andere Form ohne weiteres möglich. Die Aussage, dass die Buffer bevorzugt jeweils in der Mitte der Teiltransmitter platziert werden, die sie abdecken, bleibt gültig.

Im Folgenden werden zusätzliche Ausführungsbeispiele und Aspekte der Erfindung beschrieben, die einzeln oder in Kombination mit beliebigen der hierin beschriebenen Merkmale, Funktionalitäten und Einzelheiten verwendet werden können.

Ein erster Aspekt umfasst eine Vorrichtung zum Aussenden optisch-kabelloser Signale 12 mit: einer Signalquelle 14; 120, 180 zum Bereitstellen zumindest eines Signals 16; einer Mehrzahl räumlich verteilter optischer Transmitter 18; 150, 151 zum Aussenden einer korrespondierenden Mehrzahl optisch-kabelloser Signale 12; einer Synchronisierungseinrichtung 24, die ausgebildet ist, um das zumindest eine Signal 16 für die Mehrzahl von optischen Transmittern18; 150, 151 in eine korrespondierende Mehrzahl von untereinander synchronisierten Eingangssignalen 22 umzusetzen; wobei die Vorrichtung ausgebildet ist, um basierend auf dem zumindest einen Signal 16 mit der Mehrzahl optischer Transmitter 18; 150, 151 basierend auf der Mehrzahl untereinander synchronisierter Eingangssignale 22 die Mehrzahl optisch-kabelloser Signale 12 räumlich verteilt als untereinander synchronisierte optisch-kabelloser Signale 12 auszusenden.

Gemäß einem zweiten Aspekt unter Bezugnahme auf den ersten Aspekt ist die Signalquelle 14; 120, 180 ausgebildet, um das zumindest ein Signal 16 als ein Datensignal bereitzustellen; wobei die Mehrzahl optisch-kabelloser Signale 12 synchronisierte Signale übereinstimmenden Dateninhalts sind.

Gemäß einem dritten Aspekt unter Bezugnahme auf den ersten oder zweiten Aspekt ist die Synchronisierungseinrichtung 24 ausgebildet, um unterschiedliche Laufzeiten des zumindest einen Signals 16 von der Signalquelle 14; 120, 180 zu der Mehrzahl optischer Transmitter 18; 150, 151 aktiv auszugleichen; und/oder ausgebildet ist, um unterschiedliche Distanzen zwischen der Signalquelle 14; 120, 180 und der Mehrzahl optischer Transmitter18; 150, 151 elektrisch passiv auszugleichen.

Gemäß einem vierten Aspekt unter Bezugnahme auf zumindest einen des ersten bis dritten Aspekts weist die Synchronisierungseinrichtung 24 einen Buffer 130; 330 auf, der einen Signaleingang aufweist, der mit der Signalquelle 14; 120, 180 gekoppelt ist, um das Signal 16, 131 zu empfangen; wobei der Buffer 130; 330 eine Mehrzahl von Signalausgängen aufweist und ausgebildet ist, um eine Mehrzahl von Bufferausgangssignalen basierend auf dem Signal 16 als synchronisierte Bufferausgangssignalen auszugeben; wobei die zumindest eine Teilmenge der Mehrzahl optischer Transmitter 18; 150, 151 mit den Signalausgängen gekoppelt ist und deren Eingangssignale auf den Bufferausgangssignalen basieren oder die Bufferausgangssignale sind.

Gemäß einem fünften Aspekt unter Bezugnahme auf den vierten Aspekt weisen Signalleitungen zwischen der Mehrzahl von Signalausgängen einerseits und den mit den Signalausgängen gekoppelten optischen Transmittern 18; 150, 151 andererseits eine im Wesentlichen übereinstimmende Leitungslänge auf.

Gemäß einem sechsten Aspekt unter Bezugnahme auf den vierten oder fünften Aspekt, definieren Positionen der mit den Signalausgängen gekoppelten optischen Transmitter 18; 150, 151 einen Transmitterbereich der Vorrichtung und der Buffer 130; 330 ist im Wesentlichen mittig in dem Transmitterbereich angeordnet; oder benachbarte optische Transmitter, die entlang unterschiedlicher Signalpfade ausgehend von der Signalquelle angeordnet sind, weisen einen im Wesentlichen gleichen Abstand und/oder Laufzeitverzögerung der Eingangssignale auf.

Gemäß einem siebten Aspekt unter Bezugnahme auf zumindest einen des vierten bis sechsten Aspekts weist die Vorrichtung eine Mehrzahl von Buffern 130; 330 auf, wobei jeder zumindest einer Teilmenge der Mehrzahl von Buffern 130; 330 mit einer Teilmenge der Mehrzahl optischer Transmitter 18; 150, 151 gekoppelt.

Gemäß einem achten Aspekt unter Bezugnahme auf den siebten Aspekt bilden die Mehrzahl von Buffern 130; 330 eine kaskadierte Anordnung von Buffern 130; 330.

Gemäß einem neunten Aspekt unter Bezugnahme auf den siebten oder achten Aspekt decken die Teilmengen der optischen Transmitter 18; 150, 151 eine Transmitterfläche 28 vollständig ab und die Teilmengen optischer Transmitter 18; 150, 151 bedecken im Wesentlichen Teilflächen der Transmitterfläche gleicher Größe.

Gemäß einem zehnten Aspekt unter Bezugnahme auf zumindest einen des vierten bis neunten Aspekts ist der Buffer für eine Signalverstärkung und/oder eine Signalaufbereitung ausgebildet.

Gemäß einem elften Aspekt unter Bezugnahme auf zumindest einen des ersten bis zehnten Aspekts ist die Mehrzahl optischer Transmitter 18; 150, 151 entlang einer Kreisbahn 161 angeordnet; wobei die Mehrzahl optischer Transmitter 18; 150, 151 an oder in einem Trägersubstrat 32 angeordnet ist, das eine ringförmige Geometrie aufweist und die Mehrzahl von optischen Transmittern 18; 150, 151 ringförmig angeordnet ist.

Gemäß einem zwölften Aspekt unter Bezugnahme auf zumindest einen des ersten bis elften Aspekts weist die Vorrichtung zumindest einen optischen Empfänger 160, 170 auf, der ausgebildet ist, um ein optisch-kabelloses Signal von einer anderen Vorrichtung zu empfangen und umzusetzen.

Gemäß einem dreizehnten Aspekt unter Bezugnahme auf zumindest einen des ersten bis zwölften Aspekts ist die Signalquelle 14; 120, 180 für eine Datenverarbeitung ausgebildet, und weist einen Signalverstärker auf, und die Verstärkung des Signalverstärkers ist steuerbar.

Gemäß einem vierzehnten Aspekt unter Bezugnahme auf zumindest einen des ersten bis dreizehnten Aspekts umfassen einer, mehrere oder alle der optischen Transmitter 18; 150, 151 einen Bufferschaltkreis und/oder Treiberschaltkreis 411 und einem optischen Emitter 412.

Gemäß einem fünfzehnten Aspekt unter Bezugnahme auf zumindest einen des ersten bis vierzehnten Aspekts umfasst zumindest einer der optischen Transmitter 18; 150, 151 eine Linse, einen Reflektor und/oder einen Diffusor, um von dem optischen Transmitter 18; 150, 151 basierend auf dem Eingangssignal 22 erzeugtes Licht optisch zu formen.

Gemäß einem sechzehnten Aspekt unter Bezugnahme auf zumindest einen des ersten bis fünfzehnten Aspekts umfasst zumindest einer der optischen Transmitter 18; 150, 151 eine Mehrwegelinse, die ausgebildet ist, um eine Lichtleistung von dem optischen Transmitter 18; 150, 151 basierend auf dem Eingangssignal erzeugten Lichts in mehrere Teillichtbündel aufzuteilen.

Ein siebzehnter Aspekt umfasst ein System zum Übertragen optisch-kabelloser Signale 12, mit: einer Vorrichtung 10; 20; 25; 30; 50; 401 unter Bezugnahme auf zumindest einen des ersten bis sechzehnten Aspekts als erste Vorrichtung; und einer zweiten Vorrichtung 34; 402 zum Empfangen zumindest einer Teilmenge der synchronisierten optisch-kabellosen Signale 12.

Gemäß einem achtzehnten Aspekt unter Bezugnahme auf den siebzehnten Aspekt weist zumindest die zweite Vorrichtung 34; 402 eine Mehrzahl von räumlich verteilten optischen Empfängern auf.

Gemäß einem neunzehnten Aspekt unter Bezugnahme auf den achtzehnten Aspekt, weist die zweite Vorrichtung 34; 402 eine Verstärkereinrichtung auf, die mit zumindest einem aus der Mehrzahl von optischen Empfänger gekoppelt und nahe zu dem optischen Empfänger angeordnet ist.

Gemäß einem zwanzigsten Aspekt unter Bezugnahme auf den achtzehnten oder neunzehnten Aspekt weisen ein erster optischer Empfänger und ein benachbarter zweiter optischer Empfänger einen Abstand auf, der im Wesentlichen hälftig zu einem Abstand zwischen zwei benachbarten optischen Transmittern der ersten Vorrichtung oder ein ungeradzahliges Vielfaches hiervon ist.

Gemäß einem einundzwanzigsten Aspekt unter Bezugnahme auf zumindest einen des achtzehnten bis zwanzigsten Aspekts umfasst das System eine Verstärkerschaltung 432, die mit dem ersten optischen Empfänger und dem zweiten optischen Empfänger gekoppelt ist, um ein erstes Empfängersignal des ersten optischen Empfängers und ein zweites Empfängersignal des zweiten optischen Empfängers zu verstärken.

Gemäß einem zweiundzwanzigsten Aspekt unter Bezugnahme auf zumindest einen des achtzehnten bis zwanzigsten Aspekts umfasst das System eine erste Verstärkerschaltung 432, die ausgebildet ist, um ein erstes Empfängersignal des ersten optischen Empfängers zu verstärken, um ein erstes verstärktes Signal zu bereitzustellen; und eine zweite Verstärkerschaltung 432, die ausgebildet ist, um ein zweites Empfängersignal des zweiten optischen Empfängers zu verstärken, um ein zweites verstärktes Signal bereitzustellen; wobei die zweite Vorrichtung 34; 402 eine Verarbeitungseinrichtung 440 zum Kombinieren des ersten verstärkten Signals und des zweiten verstärkten Signals aufweist.

Gemäß einem dreiundzwanzigsten Aspekt unter Bezugnahme auf zumindest einen des achtzehnten bis zwanzigsten Aspekts umfasst das System eine erste Verstärkerschaltung 432, die ausgebildet ist, um ein erstes Empfängersignal des ersten optischen Empfängers zu verstärken, um ein erstes verstärktes Signal zu bereitzustellen; und eine zweite Verstärkerschaltung 432, die ausgebildet ist, um ein zweites Empfängersignal des zweiten optischen Empfängers zu verstärken, um ein zweites verstärktes Signal bereitzustellen; wobei die zweite Vorrichtung 34; 402 eine Verarbeitungseinrichtung 440 aufwiest, die ausgebildet ist, um eine Datenverarbeitung verstärkter Signale auszuführen und für die Datenverarbeitung eines aus dem ersten verstärkten Signal und dem zweiten verstärkten Signal auszuwählen.

Gemäß einem vierundzwanzigsten Aspekt unter Bezugnahme auf zumindest einen des achtzehnten bis dreiundzwanzigsten Aspekts ist eine Bewegungsbahn 161 einer Relativbewegung zwischen der ersten Vorrichtung 10; 20; 25; 30; 50; 401 und der zweiten Vorrichtung 34; 402 angeordnet, um in jeder Relativposition der Relativbewegung zumindest ein optischer Transmitter der ersten Vorrichtung 10; 20; 25; 30; 50; 401 in einem Empfangsbereich eines optischen Empfängers der zweiten Vorrichtung 34; 402 angeordnet ist.

Gemäß einem fünfundzwanzigsten Aspekt unter Bezugnahme auf den vierundzwanzigsten Aspekt definieren Einzelempfangsbereiche der Mehrzahl von räumlich verteilten Empfängern der zweiten Vorrichtung 34; 402 zusammengenommen einen Gesamtempfangsbereich der zweiten Vorrichtung 34; 402, und die Mehrzahl optischer Transmitter ist ausgebildet, den Gesamtempfangsbereich lückenbehaftet auszuleuchten.

Gemäß einem sechsundzwanzigsten Aspekt unter Bezugnahme auf zumindest einen des siebzehnten bis fünfundzwanzigsten Aspekts sind die erste Vorrichtung 10; 20; 25; 30; 50; 401 und die zweite Vorrichtung 34; 402 um eine gemeinsame Rotationsachse 112 rotierbar angeordnet; oder bei dem die zweite Vorrichtung 34; 402 ein einem von der Mehrzahl von synchronisierten optisch-kabelloser Signale 12 ausgeleuchteten Abdeckungsbereich beweglich ist.

Gemäß einem siebenundzwanzigsten Aspekt unter Bezugnahme auf den sechsundzwanzigsten Aspekt sind die erste Vorrichtung 10; 20; 25; 30; 50; 401 und die zweite Vorrichtung 34; 402 um eine gemeinsame Rotationsachse 112 rotierbar angeordnet und ein durch die Mehrzahl von synchronisierten optisch-kabellosen Signalen erzeugter Abdeckungsbereich stimmt im Wesentlichen mit einer Bewegungsbahn der zweiten Vorrichtung 34; 402 in dem System überein.

Gemäß einem achtundzwanzigsten Aspekt unter Bezugnahme auf zumindest einen des siebzehnten bis siebenundzwanzigsten Aspekts ist die zweite Vorrichtung 34; 402 angeordnet, um unabhängig von einer Relativposition zwischen der ersten Vorrichtung 10; 20; 25; 30; 50; 401 und der zweiten Vorrichtung 34; 402 zumindest eines der Mehrzahl von synchronisierten optisch-kabelloser Signale 12 zu detektieren.

Gemäß einem neunundzwanzigsten Aspekt unter Bezugnahme auf zumindest einen des siebzehnten bis achtundzwanzigsten Aspekts ist das System ausgebildet, um mit jedem der Mehrzahl von synchronisierten optisch-kabelloser Signale 12 einen Teilbereich eines Gesamtbereichs auszuleuchten, wobei sich an der zweiten Vorrichtung 34; 402 die Teilbereiche überlappen.

Gemäß einem dreißigsten Aspekt unter Bezugnahme auf zumindest einen des siebzehnten bis neunundzwanzigsten Aspekts ist die Mehrzahl von synchronisierten optisch-kabellosen Signalen eine erste Mehrzahl von synchronisierten optisch-kabellosen Signale eines ersten optisch-kabellosen Kommunikationskanals und die erste und/oder zweite Vorrichtung 34; 402 umfasst zumindest eine zweite Mehrzahl von synchronisierten optischen Transmittern, um einen zweiten optisch-kabellosen Kommunikationskanal bereitzustellen.

Gemäß einem einunddreißigsten Aspekt unter Bezugnahme auf den dreißigsten Aspekt sind die erste Mehrzahl und die zweite Mehrzahl auf unterschiedlichen konzentrischen Bahnen angeordnet; und/oder sind für unterschiedliche Wellenlängenbereiche eingerichtet.

Gemäß einem zweiunddreißigsten Aspekt unter Bezugnahme auf zumindest einen des siebzehnten bis einunddreißigsten Aspekts ist das System zur bidirektionalen Übertragung optisch-kabelloser Signale 12 eingerichtet.

Gemäß einem dreiunddreißigsten Aspekt unter Bezugnahme auf zumindest einen des siebzehnten bis zweiunddreißigsten Aspekts ist das System zur Übertragung elektrischer Energie basierend auf zumindest einem optisch-kabellosen Energiesignal und von der ersten zur zweiten Vorrichtung 34; 402 oder von der zweiten zur ersten Vorrichtung 10; 20; 25; 30; 50; 401 eingerichtet.

Gemäß einem vierunddreißigsten Aspekt unter Bezugnahme auf den dreiunddreißigsten Aspekt weist das System optische Emitter für die Übertragung des zumindest einem optisch-kabellosen Energiesignals auf, wobei die optischen Emitter entlang einer Bewegungsbahn einer Relativbewegung zwischen der ersten Vorrichtung 10; 20; 25; 30; 50; 401 und der zweiten Vorrichtung 34; 402 angeordnet sind und Abdeckungsbereiche der optischen Emitter zusammengenommen die gesamte Bewegungsbahn abdecken.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literatur

[1] A. Doleschel and M. Lege, "Contactless solutions for radar rotary joint systems," in 2015 16th International Radar Symposium (IRS), Dresden, Germany, 2015, pp. 451-456.
[2] F. Yuanshuang, H. Hongsheng, S. Yue, H. Han, and W. Sihan, "A Simultaneous Wireless Power and Coil Inductance Insensitive Data Transfer System for Rotary Structures," IEEE Trans. on Power Electronics, 2024*.*
[3] C. Panhans and R. Stolle, "High Bandwidth Contactless Rotary Transmitter Design Optimized for Baseband Transmission," in 2019 11th International Conference on Information Technology and Electrical Engineering (ICITEE), Pattaya, Thailand, 2019, pp. 1-6.
[4] X. He, W. Shu, B. Yu, and X. Ma, Wireless Power Transfer System for Rotary Parts Telemetry of Gas Turbine Engine. [Online]. Available: https://www.mdpi.com/2079-9292/7/5/58 (accessed: Feb. 3 2025).
[5] Anton Patyuchenko, "60 GHz Wireless Data Interconnect for Slip Ring Applications," Analog Devices, 2019.
[6] M. Faulwaßer, R. Kirrbach, T. Schneider, and A. Noack, "10 Gbit/s bidirectional transceiver with monolithic optic for rotary connector replacements," in 2018 Global LIFI Congress, 2018, pp. 95-102.
[7] M. Faulwaßer, R. Kirrbach, S. Tobias, A. Noack, and F. Deicke, "Solderable Multi-Gigabit Optical Wireless Transceiver for Rotary Communication Setups," in Optical Wireless Communication Conference 2021*.*
[8] R. Kirrbach, M. Faulwaßer, T. Schneider, P. Meißner, A. Noack, and F. Deicke, "Monolitic Hybrid Transmitter-Receiver Lens for Rotary On-Axis Communications," Applied Sciences, vol. 10, no. 4, p. 1540, 2020, doi: 10.3390/app10041540.
[9] T. Helzel and G. Martens, "Optical slip ring for off-axis high-bit-rate data transmission," Applied optics, vol. 25, no.

## Patentansprüche

1. Vorrichtung zum Aussenden optisch-kabelloser Signale (12) mit:
einer Signalquelle (14; 120, 180) zum Bereitstellen zumindest eines Signals (16);
einer Mehrzahl räumlich verteilter optischer Transmitter (18; 150, 151) zum Aussenden einer korrespondierenden Mehrzahl optisch-kabelloser Signale (12);
einer Synchronisierungseinrichtung (24), die ausgebildet ist, um das zumindest eine Signal (16) für die Mehrzahl von optischen Transmittern(18; 150, 151) in eine korrespondierende Mehrzahl von untereinander synchronisierten Eingangssignalen (22) umzusetzen;
wobei die Vorrichtung ausgebildet ist, um basierend auf dem zumindest einen Signal (16) mit der Mehrzahl optischer Transmitter (18; 150, 151) basierend auf der Mehrzahl untereinander synchronisierter Eingangssignale (22) die Mehrzahl optisch-kabelloser Signale (12) räumlich verteilt als untereinander synchronisierte optisch-kabelloser Signale (12) auszusenden.

2. Vorrichtung gemäß Anspruch 1, wobei die Mehrzahl optischer Transmitter eine erste Mehrzahl optischer Transmitter für einen ersten optisch-kabellosen Kommunikationskanal ist und die Vorrichtung zumindest eine zweite Mehrzahl von synchronisierten optischen Transmittern umfasst, um einen zweiten optisch-kabellosen Kommunikationskanal bereitzustellen, wobei die erste Mehrzahl und die zweite Mehrzahl auf unterschiedlichen konzentrischen Bahnen angeordnet sind.

3. Vorrichtung gemäß Anspruch 1 oder 2, bei der die Synchronisierungseinrichtung (24) ausgebildet ist, um unterschiedliche Laufzeiten des zumindest einen Signals (16) von der Signalquelle (14; 120, 180) zu der Mehrzahl optischer Transmitter(18; 150, 151) aktiv auszugleichen; und/oder ausgebildet ist, um unterschiedliche Distanzen zwischen der Signalquelle (14; 120, 180) und der Mehrzahl optischer Transmitter(18; 150, 151) elektrisch passiv auszugleichen.

4. Vorrichtung gemäß einem der vorangehenden Ansprüche, bei der die Synchronisierungseinrichtung (24) einen Buffer (130; 330) aufweist, der einen Signaleingang aufweist, der mit der Signalquelle (14; 120, 180) gekoppelt ist, um das Signal (16, 131) zu empfangen;
wobei der Buffer (130; 330) eine Mehrzahl von Signalausgängen aufweist und ausgebildet ist, um eine Mehrzahl von Bufferausgangssignalen basierend auf dem Signal (16) als synchronisierte Bufferausgangssignalen auszugeben;
wobei die zumindest eine Teilmenge der Mehrzahl optischer Transmitter (18; 150, 151) mit den Signalausgängen gekoppelt ist und deren Eingangssignale auf den Bufferausgangssignalen basieren oder die Bufferausgangssignale sind.

5. Vorrichtung gemäß Anspruch 4, bei der Positionen der mit den Signalausgängen gekoppelten optischen Transmitter (18; 150, 151) einen Transmitterbereich der Vorrichtung definieren und der Buffer (130; 330) im Wesentlichen mittig in dem Transmitterbereich angeordnet ist; oder benachbarte optische Transmitter, die entlang unterschiedlicher Signalpfade ausgehend von der Signalquelle angeordnet sind, einen im Wesentlichen gleichen Abstand und/oder Laufzeitverzögerung der Eingangssignale aufweisen,
wobei die Vorrichtung eine Mehrzahl von Buffern (130; 330) aufweist, wobei jeder zumindest einer Teilmenge der Mehrzahl von Buffern (130; 330) mit einer Teilmenge der Mehrzahl optischer Transmitter (18; 150, 151) gekoppelt ist.

6. Vorrichtung gemäß Anspruch 4, bei der die Mehrzahl von Buffern (130; 330) eine kaskadierte Anordnung von Buffern (130; 330) bilden.

7. Vorrichtung gemäß einem der Ansprüche 4 bis 6, bei der der Buffer für eine Signalverstärkung und/oder eine Signalaufbereitung ausgebildet ist.

8. Vorrichtung gemäß einem der vorangehenden Ansprüche, bei der einer, mehrere oder alle der optischen Transmitter (18; 150, 151) einen Bufferschaltkreis und/oder Treiberschaltkreis (411) und einem optischen Emitter (412) umfassen.

9. Vorrichtung gemäß einem der vorangehenden Ansprüche, bei der zumindest einer der optischen Transmitter (18; 150, 151) eine Mehrwegelinse umfasst, die ausgebildet ist, um eine Lichtleistung von dem optischen Transmitter (18; 150, 151) basierend auf dem Eingangssignal erzeugten Lichts in mehrere Teillichtbündel aufzuteilen.

10. System zum Übertragen optisch-kabelloser Signale (12), mit:
einer Vorrichtung (10; 20; 25; 30; 50; 401) gemäß einem der vorangehenden Ansprüche als erste Vorrichtung; und
einer zweiten Vorrichtung (34; 402) zum Empfangen zumindest einer Teilmenge der synchronisierten optisch-kabellosen Signale (12).

11. System gemäß Anspruch 10, bei dem zumindest die zweite Vorrichtung (34; 402) eine Mehrzahl von räumlich verteilten optischen Empfängern aufweist; und bei dem die zweite Vorrichtung (34; 402) eine Verstärkereinrichtung aufweist, die mit zumindest einem aus der Mehrzahl von optischen Empfänger gekoppelt und nahe zu dem optischen Empfänger angeordnet ist.

12. System gemäß Anspruch 10 oder 11, bei dem zumindest die zweite Vorrichtung (34; 402) eine Mehrzahl von räumlich verteilten optischen Empfängern aufweist; und
mit einer Verstärkerschaltung (432), die mit dem ersten optischen Empfänger und dem zweiten optischen Empfänger gekoppelt ist, um ein erstes Empfängersignal des ersten optischen Empfängers und ein zweites Empfängersignal des zweiten optischen Empfängers zu verstärken; oder
mit einer ersten Verstärkerschaltung (432) die ausgebildet ist, um ein erstes Empfängersignal des ersten optischen Empfängers zu verstärken, um ein erstes verstärktes Signal zu bereitzustellen; und mit einer zweiten Verstärkerschaltung (432), die ausgebildet ist, um ein zweites Empfängersignal des zweiten optischen Empfängers zu verstärken, um ein zweites verstärktes Signal zu bereitzustellen;
wobei die zweite Vorrichtung (34; 402) eine Verarbeitungseinrichtung (440) zum Kombinieren des ersten verstärkten Signals und des zweiten verstärkten Signals aufweist; oder
mit einer ersten Verstärkerschaltung (432) die ausgebildet ist, um ein erstes Empfängersignal des ersten optischen Empfängers zu verstärken, um ein erstes verstärktes Signal zu bereitzustellen; und mit einer zweiten Verstärkerschaltung (432), die ausgebildet ist, um ein zweites Empfängersignal des zweiten optischen Empfängers zu verstärken, um ein zweites verstärktes Signal zu bereitzustellen;
wobei die zweite Vorrichtung (34; 402) eine Verarbeitungseinrichtung (440) aufwiest, die ausgebildet ist, um eine Datenverarbeitung verstärkter Signale auszuführen und für die Datenverarbeitung eines aus dem ersten verstärkten Signal und dem zweiten verstärkten Signal auszuwählen.

13. System gemäß einem der Ansprüche 10 bis 12, bei dem die Mehrzahl von synchronisierten optisch-kabellosen Signalen eine erste Mehrzahl von synchronisierten optisch-kabellosen Signale eines ersten optisch-kabellosen Kommunikationskanals ist und die erste und/oder zweite Vorrichtung (34; 402) zumindest eine zweite Mehrzahl von synchronisierten optischen Transmittern umfasst, um einen zweiten optisch-kabellosen Kommunikationskanal bereitzustellen;
wobei die erste Mehrzahl und die zweite Mehrzahl auf unterschiedlichen konzentrischen Bahnen angeordnet sind.

14. System gemäß einem der Ansprüche 10 bis 13, das zur Übertragung elektrischer Energie basierend auf zumindest einem optisch-kabellosen Energiesignal und von der ersten zur zweiten Vorrichtung (34; 402) oder von der zweiten zur ersten Vorrichtung (10; 20; 25; 30; 50; 401) eingerichtet ist.

15. System gemäß Anspruch 14, das optische Emitter für die Übertragung des zumindest einem optisch-kabellosen Energiesignals aufweist, wobei die optischen Emitter entlang einer Bewegungsbahn einer Relativbewegung zwischen der ersten Vorrichtung (10; 20; 25; 30; 50; 401) und der zweiten Vorrichtung (34; 402) angeordnet sind und Abdeckungsbereiche der optischen Emitter zusammengenommen die gesamte Bewegungsbahn abdecken.
